# EUROPÄISCHE PATENTSCHRIFT

(11) **EP 0 545 207 B1**
(45) Veröffentlichungstag und Bekanntmachung des Hinweises auf die Patenterteilung: **24.02.1999**
(21) Anmeldenummer: 92119925.3
(22) Anmeldetag: 23.11.1992
(51) Int. Cl.: C09B 67/22, D06P 3/66

(54) **Reaktivfarbstoffmischung mit verbessertem Kombinationsverhalten**
Reactive dye mixture with improved combination characteristics
Mélange de colorants réactifs ayant des caractéristiques de combinaison améliorées

(30) Priorität: 04.12.1991 DE 4139953; 23.12.1991 DE 4142766
(43) Veröffentlichungstag der Anmeldung: 09.06.1993
(73) Patentinhaber: BAYER AG, 51368 Leverkusen (DE)
(72) Erfinder: Schwarz, Max, Dr., W-5090 Leverkusen 3 (DE); Grütze, Joachim, Dr., W-5068 Odenthal (DE); Hildebrand, Dietrich, Dr., W-5068 Odenthal (DE); Wolff, Joachim, Dr., W-5068 Odenthal (DE); Stöhr, Frank-Michael, Dr., W-5068 Odenthal (DE)

(56) Entgegenhaltungen:
- EP-A- 0 224 224
- EP-A- 0 377 902
- EP-A- 0 437 184
- EP-A- 0 478 503
- EP-A- 0 485 336
- DE-B- 3 718 397
- GB-A- 2 226 336
- CHEMICAL ABSTRACTS, vol. 116, no. 2, 13. Januar 1992, Columbus, Ohio, US; abstract no. 7868m, N. HARADA; S. HASHIZUME 'Reactive dye mixture' Seite 65 ;Spalte 2 ;

## Beschreibung

Die Erfindung betrifft Mischungen von Reaktivfarbstoffen, die beim Färben von Cellulose oder Celluloseregeneratfasern ein gegenüber den Einzelkomponenten verbessertes Kombinationsverhalten besitzen.

Reaktivfarbstoffe werden in Form ihrer Einzelkomponenten oder in Form von Mischungen verschiedener Farbstoffe zum Färben von Cellulosefasern verwendet. Bei den Mischungen sollen die Reaktivitäten der Einzelkomponenten der Mischung möglichst gleich oder zumindest ähnlich sein, um die Kombinierbarkeit der Farbstoffe während des Färbevorgangs zu gewährleisten und somit ein "ruhiges", egales Warenbild zu erreichen. Besitzen Reaktivfarbstoffe stark unterschiedliche Reaktivitäten, so werden sie als voneinander verschiedenen Farbstoffsortimenten zugehörig angesehen, die nach unterschiedlichen Alkali- und Temperaturbedingungen angewandt werden müssen. Nach dem heutigen Sprachgebrauch werden die Reaktivfarbstoffe aufgrund ihrer unterschiedlichen Reaktivität in drei Gruppen eingeteilt: Hochreaktive Reaktivfarbstoffe, die bereits unter 40°C färbbar sind, bezeichnet man als Kaltfärber, Farbstoffe, die bei 40 bis 60°C angewandt werden, als Warmfärber, und Farbstoffe, die im Bereich von 80°C angewandt werden, als Heißfärber. Die unterschiedlichen durch die Reaktivität des Farbstoffs bedingten Anwendungstemperaturen erfordern entsprechend unterschiedliches Substantivitätsverhalten. Die Substantivität eines Farbstoffs bedingt das Aufziehen aus der Färbeflotte auf die Faser, bevor durch Alkalizugabe eine echte Fixierung eintritt. Eine höhere Färbetemperatur erfordert daher zwangsläufig eine höhere Substantivität, um eine wirtschaftlich tragbare Fixierausbeute zu erlangen. Aufgrund ihrer unterschiedlichen Reaktivität und Substantivität werden die drei unterschiedlich reaktiven Farbstoffsortimentsgruppen mittels gruppentypischer Verfahrensvorschriften appliziert.

Der Unterschied zwischen der Anwendung eines Warmfärbers und eines Heißfärbers besteht in einer beim Heißfärber um 20 bis 40°C höheren Färbetemperatur, in einer um 40 g/l Kochsalz höheren Elektrolytkonzentration und einer um 10 g/l höheren Sodakonzentration des Färbebades. Reaktivfarbstoffe vom Typ des Warmfärbers und solche vom Typ des Heißfärbers gelten daher als nicht in einem Färbebad applizierbar.

Reaktivfarbstoffe zum Färben von Cellulosefasern dienen insbesondere zum Färben von farbstarken Modetönen für Artikel, die eine hohe Waschechtheit verlangen. Hierbei ist von besonderem Interesse die Erstellung farbstarker Färbungen hoher Egalität. Die Erstellung egaler farbstarker Färbungen auf Basis eines einheitlichen Reaktivfarbstoffmoleküls ist mittels der heute im Markt befindlichen Farbstoffe mit erheblichen technischen Einschränkungen belastet. Bekannte Farbstoffe hoher Brillanz aus dem Bereich der Warmfärber besitzen in der Regel einen Mangel an Löslichkeit in Gegenwart des für die Reaktionsausbeute erforderlichen Elektrolytzusatzes. Sie besitzen dazu ein hohes Reaktivitätsniveau gegenüber der Baumwolle und neigen daher zu einem unegalen Aufziehen und vorschnellen Fixieren, besonders auf Kurzflottenfärbeaggregaten, so daß ihre diesbezügliche Anwendung eingeschränkt ist.

Farbstoffe aus dem Bereich der Heißfärber besitzen eine höhere Löslichkeit und geringere Reaktivität, sie erweisen sich aber für viele praktische Anforderungen als ungeeignet, da die erforderliche Robustheit gegenüber variablen Alkali-, Salz- und Temperaturbedingungen sowie unterschiedlichen Flottenverhältnissen nicht erreicht wird. Bekannt sind zwar Reaktivfarbmischungen mit verbesserter Löslichkeit aus Reaktivfarbstoffen, die jeweils einem Reaktivtyp entsprechen, d.h. entweder als Warmfärber oder als Heißfärbermischung bezeichnet werden, diese zeigen jedoch den Nachteil, bei ihrer Anwendung auf eine Färbetemperatur von 50°C oder von 80°C beschränkt zu sein, wodurch eine Einschränkung ihrer Anwendbarkeit gegeben ist.

Der Temperaturbereich von 60°C besitzt für die Färbereien den Vorteil, daß die Färbung mit einer gegenüber der 80°C-Methode deutlich verringertem Elektrolytmenge durchgeführt werden kann, wodurch eine erhebliche Reduzierung der Abwasserbelastung und damit eine Einsparung umweltrelevanter Kosten erzielt wird.

Beim Färben mit heute praxisüblichen Reaktivfarbstoffmischungen tritt eine starke Abhängigkeit der Nuance von unterschiedlichen Färbebedingungen wie wechselnde Flottenverhältnisse, Salz- und Temperaturbedingungen auf.

Der Erfindung liegt die Aufgabe zugrunde, Reaktivfarbstoffmischungen bereitzustellen, die bei guter Fixierausbeute einen gleichmäßigen Fixierkurvenverlauf zeigen, der dem der Einzelfarbstoffe überlegen ist, wobei eine Vereinheitlichung der Salz-, Alkali- und Temperaturbedingungen für alle Farbtiefen einer Kombination ermöglicht wird.

Die Farbstoffmischung sollte eine hohe Löslichkeit und Elektrolytunempfindlichheit aufweisen und bei variablen Temperatur-, Alkali- und Flottenbedingungen ein nuancenkonstantes flächenegales und reproduzierbares Färbeverhalten zeigen.

Die vorliegende Erfindung betrifft eine Farbstoffmischung aus wenigstens zwei Reaktivfarbstoffen, dadurch gekennzeichnet, daß wenigstens ein Monochlortriazinfarbstoff 1 der Formeln 1.1 bis 1.7 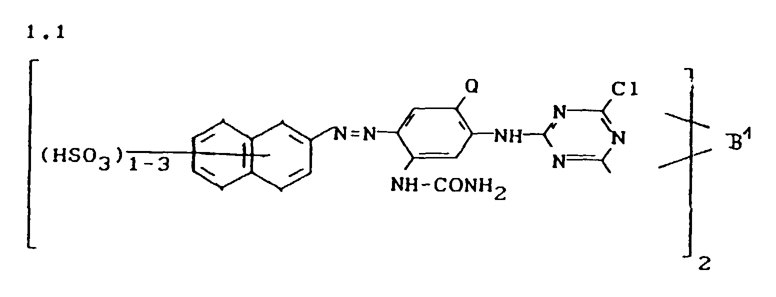 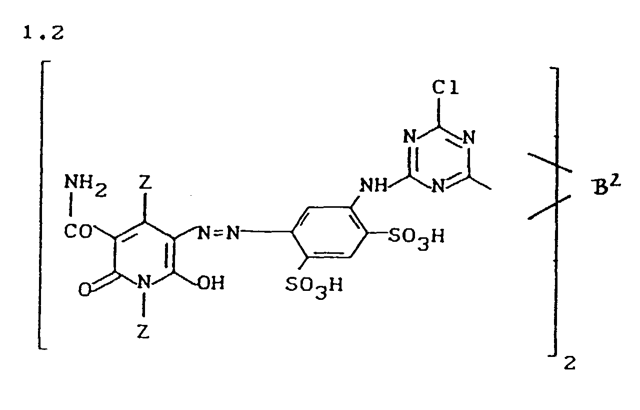 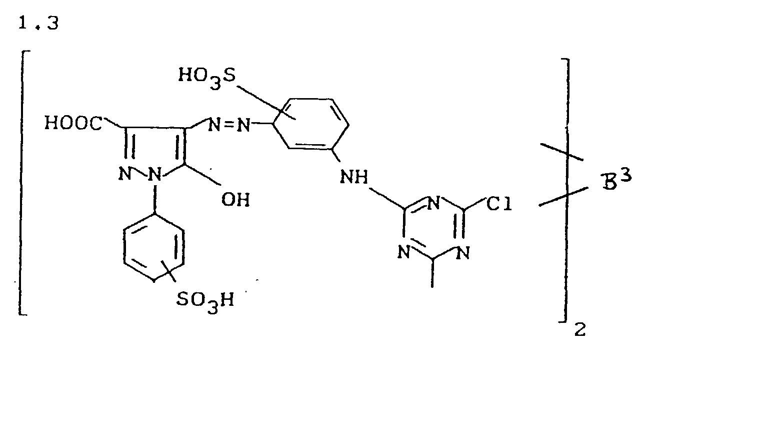 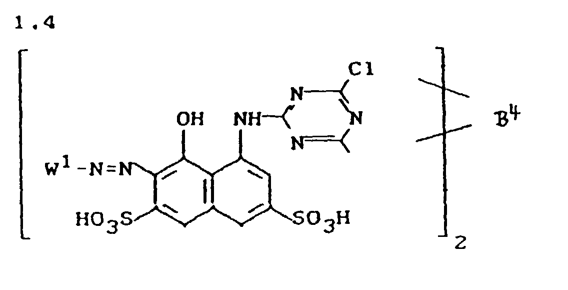 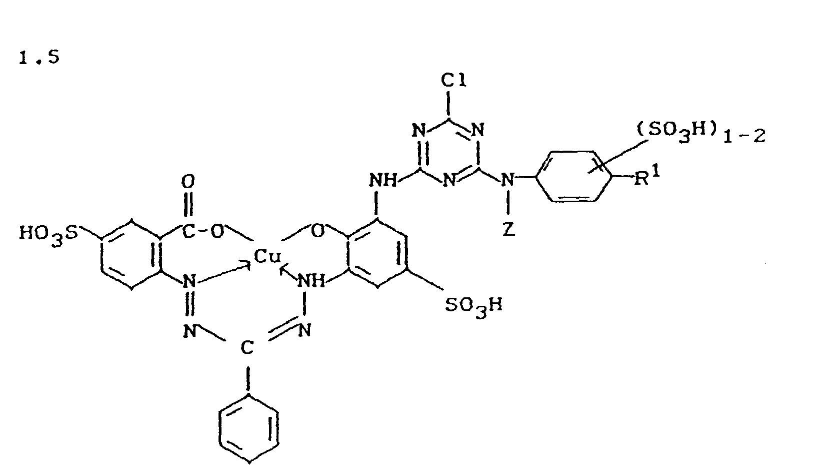 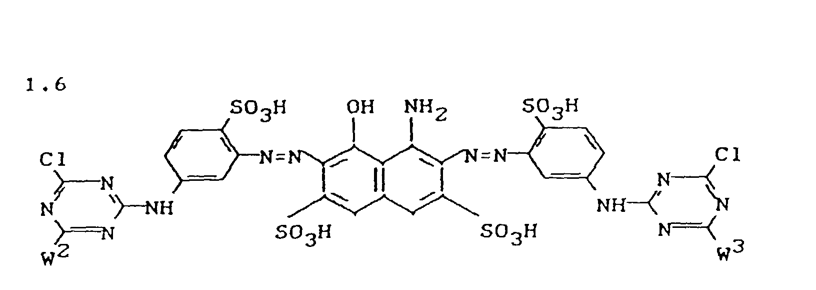 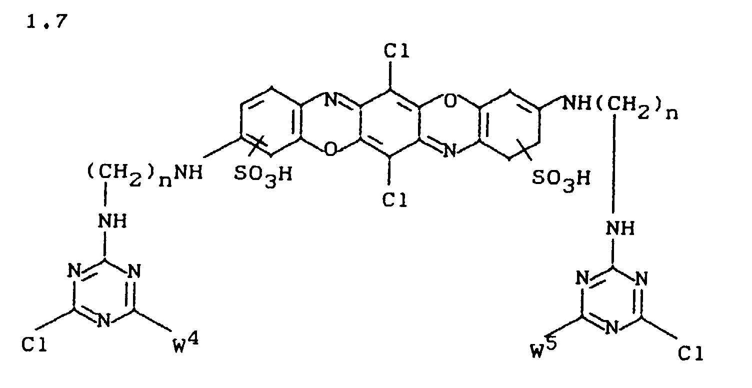 und wenigstens ein Monofluortriazinfarbstoff der Formel 2.1 bis 2.7 und/oder ein Fluorchlorpyrimidinfarbstoff der Formel 3.1 bis 3.5 verwendet werden 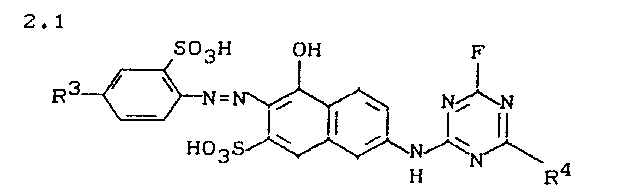 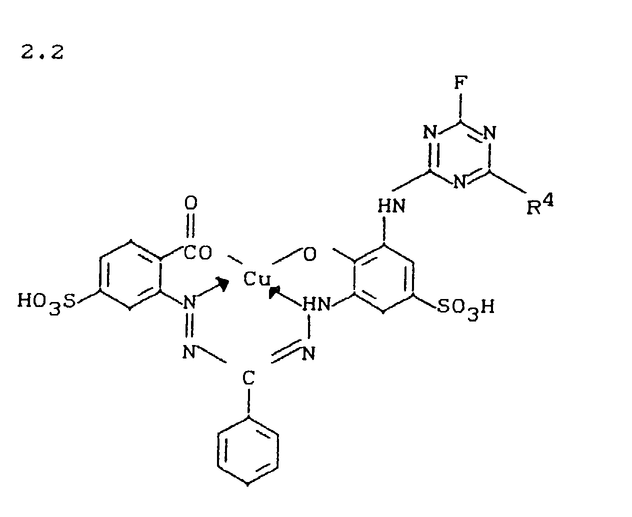 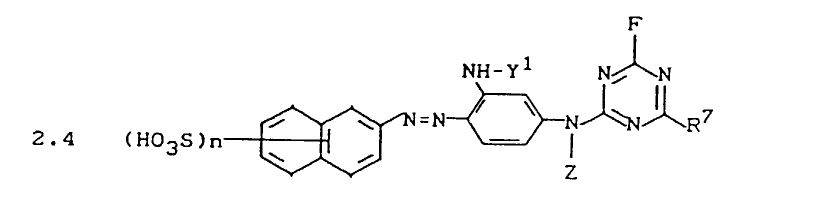 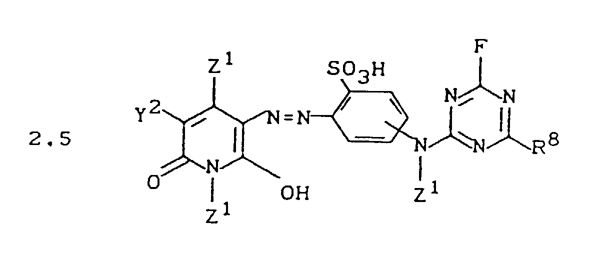 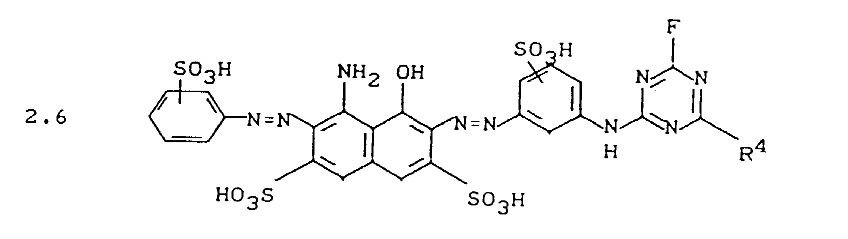 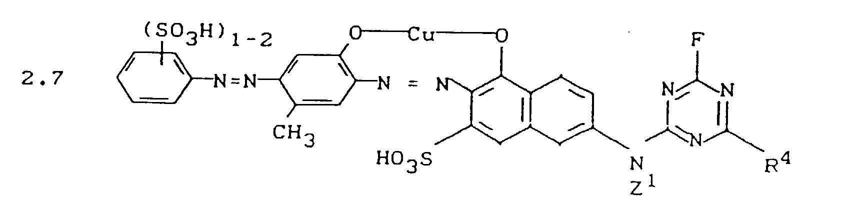 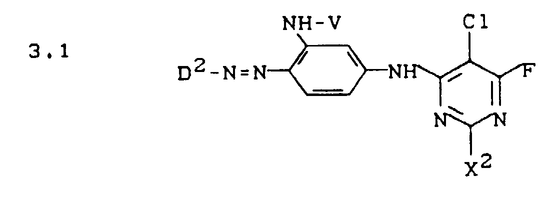 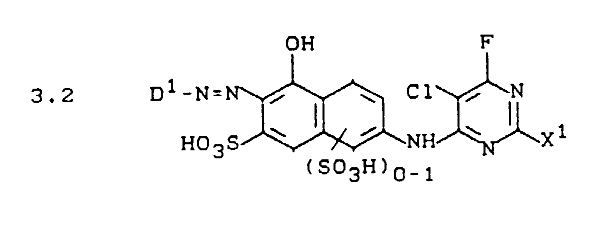 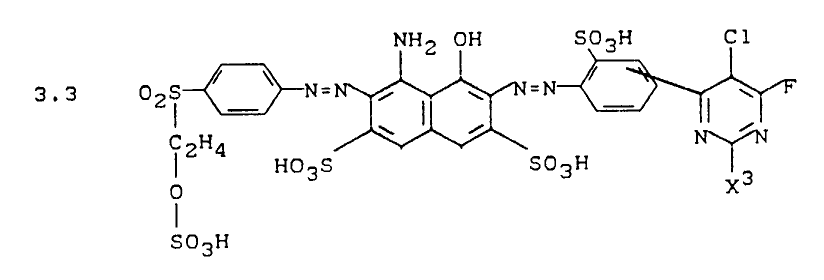 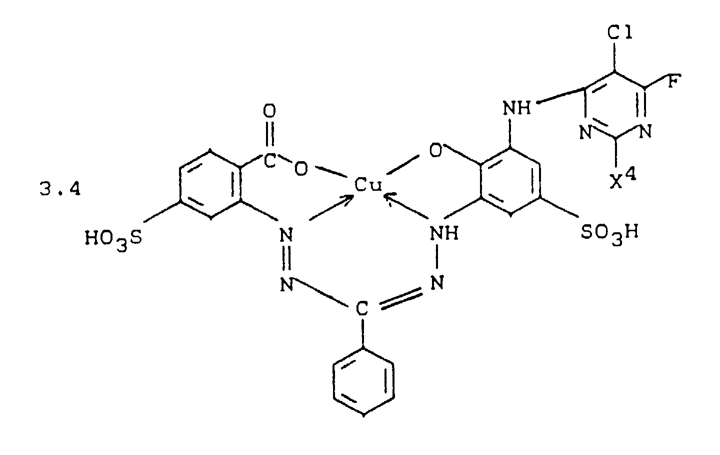 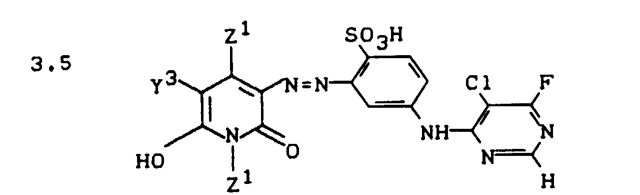 worin bedeuten
B¹-B⁴ unabhängig voneinander 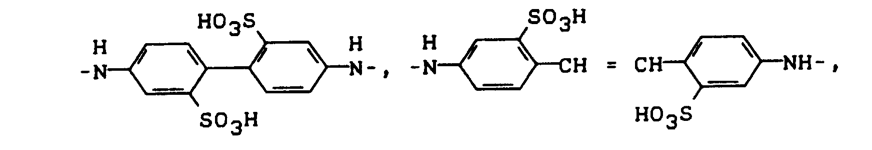 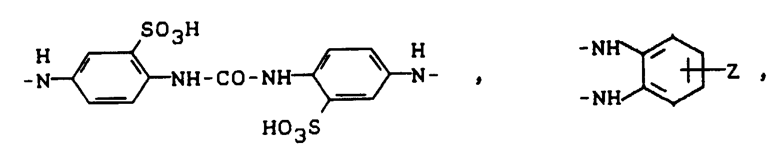 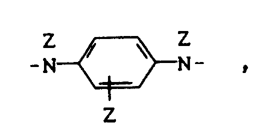
Q = O-CH₃ oder H
R¹ = -SO₂-CH₂-CH₂OSO₃H oder 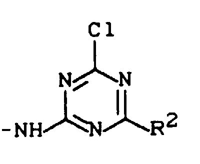
R² = -NH-Z, -NH-CH₂-CH₂-SO₃H, 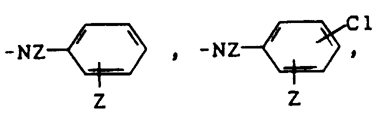 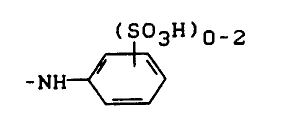
R³ = 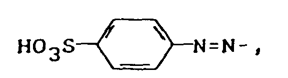 H₃CO-
R⁴, R⁵, R⁷ und R⁸ = unabhängig voneinander -NH-Z¹, -NH-CH₂-CH₂-SO₃H, 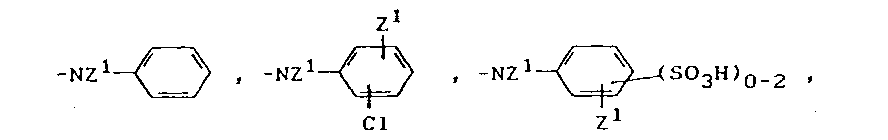
Z = unabhängig voneinander H oder C₂-C₄-Alkyl,
Z¹ = unabhängig voneinander H, C₁-C₄-Alkyl,
V = unabhangig voneinander CONH₂, COCH₃,
W¹ = 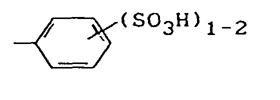
W²-W⁵ = unabhängig voneinander 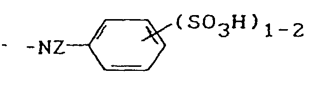
X¹-X⁴ = unabhängig voneinander H, F
Y¹ - Y³ = -CONH₂-, COCH₃, -(CH₂)ₘ-SO₃H,
D¹, D2 = 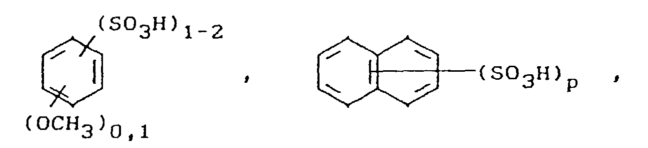 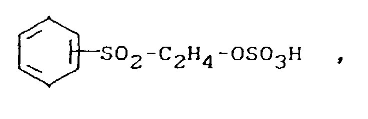
m = unabhängig voneinander 1-4,
n = unabhängig voneinander 2-4,
p = unabhängig voneinander 1-3.

In einer besonders bevorzugten Ausführungsform ist weiterhin der Farbstoff 4.1 folgender Formel enthalten

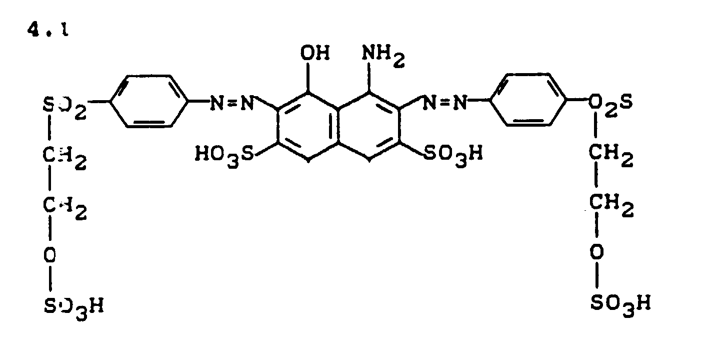

Besonders bevorzugte Mischungen werden im folgenden angegeben:
Mischung 1: Farbstoffe 1.1, 1.4 und 3.2
Mischung 2: Farbstoffe 1.2 und 2.5
Mischung 3: Farbstoffe 1.3 und 2.4
Mischung 4: Farbstoffe 1.1, 1.4 und 2.1
Mischung 5: Farbstoffe 1.5 und 2.2
Mischung 6: Farbstoffe 1.6, 3.3 und 4.1
Mischung 7: Farbstoffe 1.7 und 2.2
Mischung 8: Farbstoffe 1.7 und 2.3
Mischung 9: Farbstoffe 1.3 und 3.1
Mischung 10: Farbstoffe 1.7 und 2.6
Mischung 11: Farbstoffe 1.7 und 2.7
Mischung 12: Farbstoffe 1.7 und 3.4
Mischung 13: Farbstoffe 1.5 und 3.4
Mischung 14: Farbstoffe 1.5, 3.4 und 4.1
Mischung 15: Farbstoffe 1.6, 3.3 und 4.1
Mischung 16: Farbstoffe 1.2 und 3.5

In einer bevorzugten Ausführungsform enthalten die Mischungen, bezogen auf den gesamten Farbstoffgehalt:
Farbstoff 1: 40 bis 60, insbesondere 40 bis 55 Gew.-%
Farbstoff 2: 0 bis 60, insbesondere 50 bis 60 Gew.-%
Farbstoff 3: 0 bis 60, insbesondere 32 bis 50 Gew.-%
Farbstoff 4: 0 bis 60, insbesondere 0 bis 13 Gew.-%

Die erfindungsgemäßen Mischungen eignen sich insbesondere für das Färben im Ausziehverfahren vorzugsweise nach folgendem Schema:

| Zeit (Min) | Temperatur (°C) | Maßnahme |
|---|---|---|
| 0 | 30°C | |
| | | Farbstoffzusatz |
| 10 | 30 | Elektrolytzusatz (50 g/l Kochsalz) |
| 20 | 30 | Alkalizusatz (20 g/l Soda, wasserfrei) |
| 30 | 30 | Beginn der Aufheizphase |
| 60 | 60 | mit 1°/Minute |
| 150 | 60 | Ablassen und Auffüllen |
| 160 | 50 | Warm Spülen |
| 170 | 50 | Ablassen und Auffüllen |
| 180 | 50 | Warm Spülen |
| 190 | 50 | Ablassen und Auffüllen |
| 200 | 80 | Heiß Spülen |
| 210 | 80 | Ablassen und Auffüllen |
| 210 | 80 | Heiß Spülen |
| 220 | 80 | Ablassen und Auffüllen |
| 235 | 95 | Heiß Waschen |
| 240 | 95 | Heiß Ablassen im Überlauf |
| 245 | 80 | Warm Spülen im Überlauf |
| 250 | 20 | Kalt Spülen |
| 260 | 20 | Färbegut entnehmen. |

Aus EP-A-478 503 sind bereits Farbstoffmischungen bekannt, jedoch findet sich kein Hinweis auf die erfindungsgemaßen Mischungen.

Aus DE-A-37 18 397 sind ebenfalls Farbstoffmischungen von Formazan-Reaktivfarbstoffen bekannt, die als Reaktivreste Fluorpyrimidinyl- und Halogentriazinylreste enthalten.

Die Farbstoffmischung kann vorzugsweise zum Farben von Baumwolle und anderen Cellulosefasern im Ausziehverfahren auf üblichen Farbeaggregaten verwendet werden.

Zusätzlich können weitere Farbstoffe oder übliche Hilfsmittel eingesetzt werden. Insbesondere enthalten die erfindungsgemaßen Farbstoffmischungen pro 100 Teile Farbstoff 1 bis 50 Teile eines anorganischen Salzes wie beispielsweise Kochsalz oder Natriumsulfat. Die erfindungsgemäßen Mischungen enthalten weiterhin vorzugsweise einen Puffer, insbesondere einen anorganischen Puffer, der einen Pufferungsbereich zwischen pH von 6,5 bis 7,5 ergibt. Zur besseren Handhabung enthalten die erfindungsgemäßen Mischungen vorzugsweise Dispergiermittel, insbesondere 0,5 bis 10 Gew.-Teile eines organischen, anionischen Dispergiermittels, bezogen auf die gesamte Mischung und ein Entstaubungsmittel, vorzugsweise 0,5 bis 5 Gew.-Teile, bezogen auf die gesamte Mischung.

### Beispiel 1

1000 Teile einer wäßrigen Färbeflotte werden bei 30°C mit 100 Teilen Baumwollwirkware und 2 Teilen Reaktivfarbstoffmischung versetzt. Die Mischung besteht aus je 1 Teil des Farbstoffs 1.1 und des Farbstoffs 3.1 der Formeln

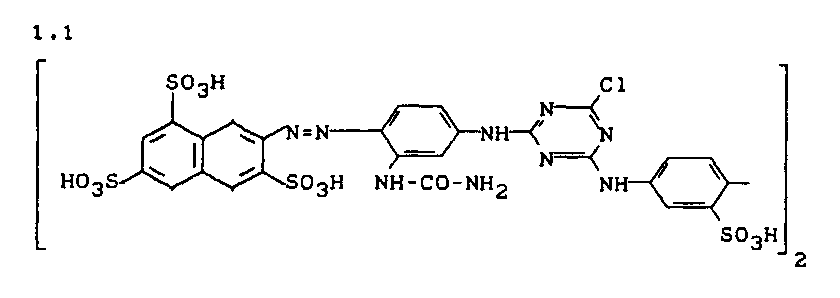

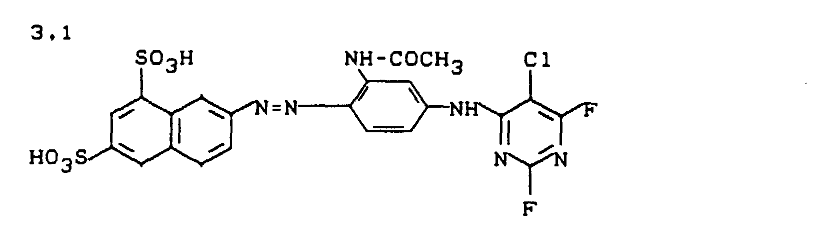

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Diese Färbeflotte wird bei lebhafter Flotten- und Warenbewegung innerhalb 30 Minuten auf 60°C erwärmt und bei dieser Temperatur 90 Minuten belassen.

Danach wird die Flotte abgelassen, zweimal bei 50°C und zweimal bei 80°C gespült. Anschließend wird 15 Minuten kochend geseift und kalt gespült. Man erhält eine egale Gelbfärbung mit guten Echtheitseigenschaften.

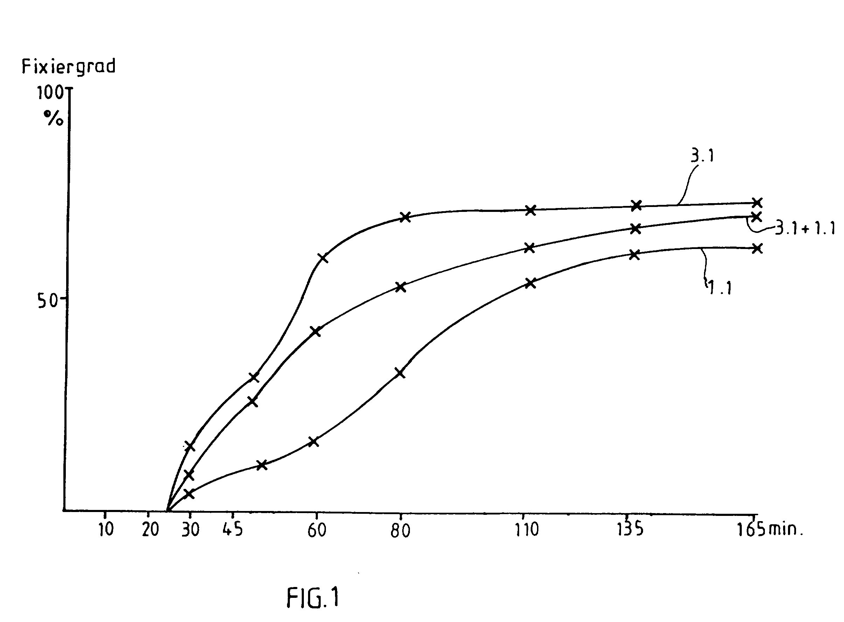

Werden die Einzelfarbstoffe der Farbstoffmischungen nach diesem Färbeschema gefärbt, so ergeben sich die in Fig. 1 dargestellten Fixierkurven.

Der reaktivere Farbstoff 3.1 beginnt nach Zugabe des Fixiermittels bei 30°C sofort mit der Cellulosefaser zu reagieren.

Wenn die Hauptreaktion sich verlangsamt, beginnt die Aufheizphase auf die Endtemperatur von 60°C, während der eine erneute Reaktionsbeschleunigung beobachtet wird.

Kurze Zeit nach dem 60°C erreicht sind, geht die Fixierkurve in den waagerechen Teil über; die Färbung ist beendet.

Der weniger reaktive Farbstoff 1.1 reagiert bei den gewählten Startbedingungen zunächst langsam mit der Faser. Während der Aufheizphase tritt jedoch eine deutliche Steigerung der Reaktionsgeschwindigkeit ein.

Wird die Färbung mit einer Mischung der Farbstoffe 1.1 und 3.1 durchgeführt, dann zeigen die Einzelkomponenten in der Mischung ein gegenüber dem Typfarbstoff harmonischeres Aufziehverhalten, welches sich in einer gegenüber der Fixierkurve von 3.1 flacheren und gegenüber der Fixierkurve 1.1 steileren Aufziehkurve äußert, d.h. der reaktionsträgere Farbstoff 1.1 fixiert in der Mischung bei gleichen Fixierbedingungen schneller als seinem Fixierverhalten als Typ entspricht.

Unerwartet und überraschend ist die Tatsache, daß die miteinander gemischten Farbstoffe eine gemeinsame Fixierkurve durchlaufen, die ein Maß für die positive gegenseitige Beeinflussung der Farbstoffe ist.

Weiterhin ist es überraschend, daß die reaktivere Mischungskomponente trotz der scheinbar zu scharf gewählten Fixierbedingungen das Material gleichmäßig und mit hoher Ausbeute anfärbt. Die weniger reaktive Mischungskomponente erreicht andererseits trotz der scheinbar zu "milden" Reaktionsbedingungen gute Endausbeuten.

### Beispiel 2

100 Teile einer Baumwollwirkware werden bei 30° mit 1000 Teilen einer wäßrigen Färbeflotte behandelt, welche 4 Teile einer eingestellten Scharlachmischung bestehend aus
60 Teilen Farbstoff 2.1
14,5 Teilen Farbstoff 1.4
25,5 Teilen Farbstoff 1.1
der Formeln 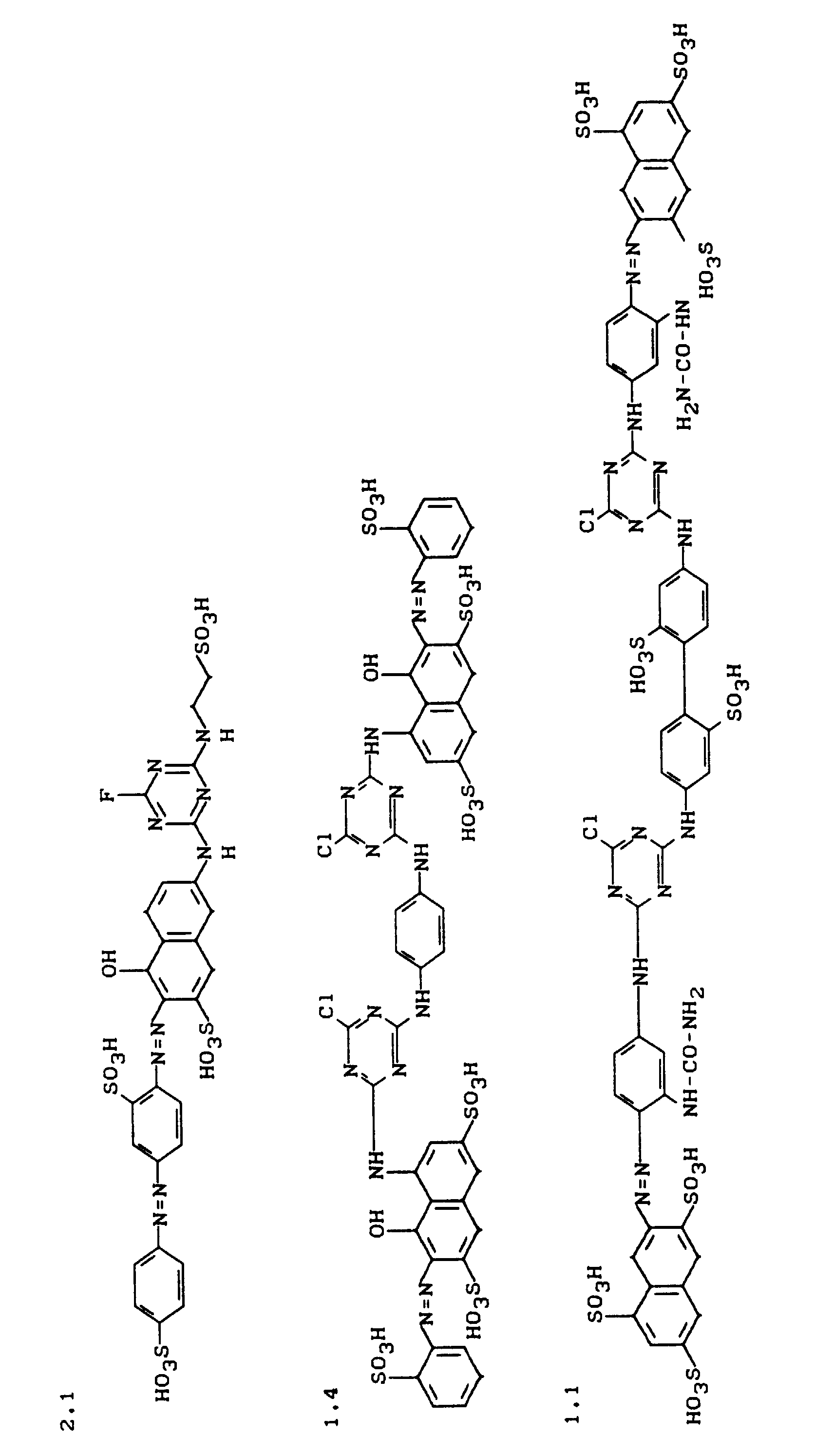 sowie
1/2 Teile Natriumbicarbonat
50 Teile Natriumchlorid und
20 Teile Soda (wasserfrei) gelöst enthält.

Nach gleichmäßiger Verteilung des Farbstoffs auf dem Fasermaterial über 45 Minuten bei 30°C wird die Flotte in 30 Minuten bei lebhafter Warenbewegung und guter Flottenzirkulation auf 60°C erwärmt und 90 Minuten bei dieser Temperatur behandelt. Danach wird die Flotte abgelassen, zweimal bei 50°C und zweimal bei 80°C gespült. Daraufhin wird mit frischer Flotte aufgefüllt und auf 98°C erwärmt. Nach 10 Minuten wird abgelassen und erneut 10 Minuten bei 98°C behandelt. Daraufhin wird abgelassen und kalt gespült. Man erhält eine brillante Scharlachfärbung mit guten Echtheitseigenschaften.

### Beispiel 2a

100 Teile einer Baumwollwirkware werden auf einem Kurzflottenjet bei 30°C mit 400 Teilen einer wäßrigen Flotte behandelt, welche

4 Teile einer Scharlachmischung, Farbstoffe gemäß Beispiel 2
sowie
0,5 Teile Natriumbicarbonat
15 Teile Soda (wasserfrei) und
30 Teile Natriumchlorid
gelöst enthält.

Nach 30 Minuten Behandlung bei dieser Temperatur wird während 30 Minuten auf 60°C erwärmt und weitere 30 Minuten bei dieser Temperatur unter lebhafter Flottenzirkulation und Warenbewegung gefärbt.

Daraufhin wird die Flotte abgelassen, zweimal bei 50° und zweimal bei 80°C gespült und zweimal jeweils 10 Minuten bei Kochtemperatur behandelt. Anschließend wird kalt gespült.

Man erhält eine sehr klare Scharlachfärbung mit guten Echtheitseigenschaften.

### Beispiel 3

1000 Teile einer wäßrigen Färbeflotte werden bei 30°C mit 100 Teilen Baumwollwirkware und 2 Teilen Reaktivfarbstoffmischung versetzt. Die Mischung besteht aus je 1 Teil der Farbstoffe 2.2 und 1.5, der Formeln

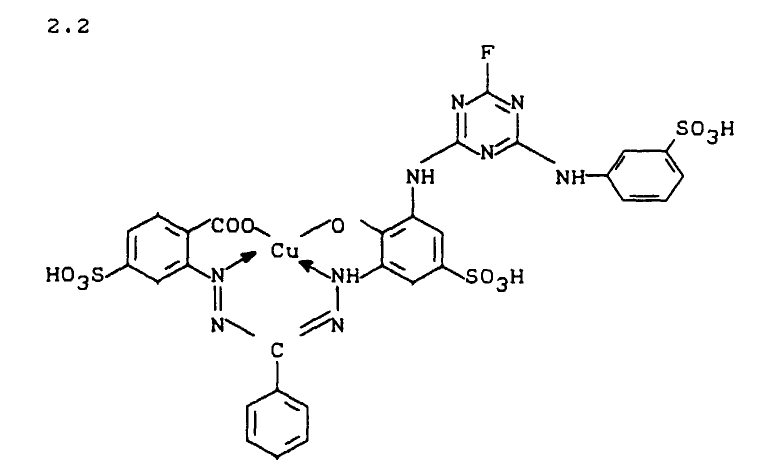

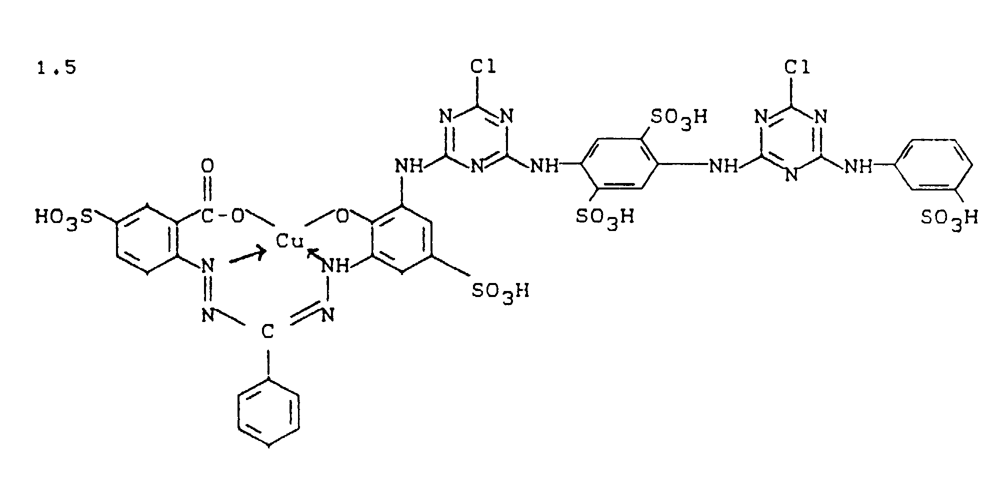

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Diese Färbeflotte wird bei lebhafter Flotten- und Warenbewegung innerhalb 30 Minuten auf 60°C erwärmt und bei dieser Temperatur 90 Minuten belassen.

Danach wird die Flotte abgelassen, zweimal bei 50°C und zweimal bei 80°C gespült. Anschließend wird 15 Minuten kochend geseift und kalt gespült. Man erhält eine egale Blaufärbung mit guten Echtheitseigenschaften.

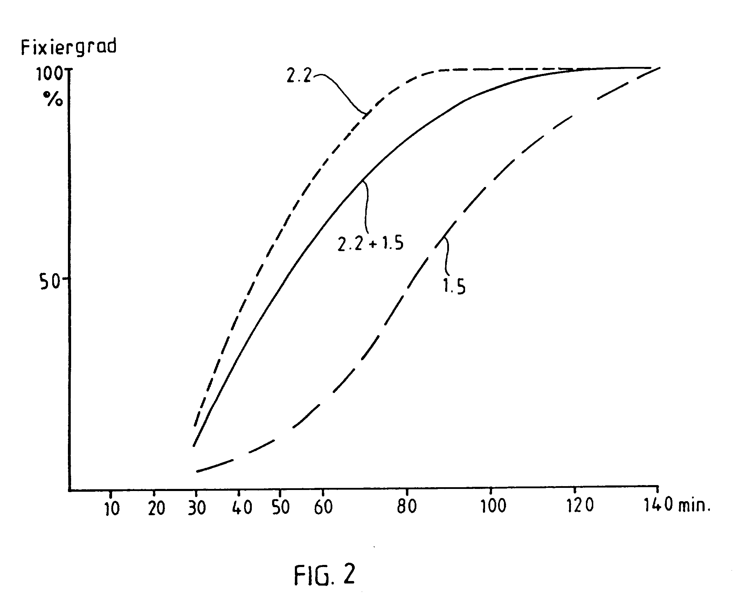

Werden die Einzelfarbstoffe der Farbstoffmischungen gefärbt, so ergeben sich die in Fig. 2 dargestellten Fixierkurven.

Der reaktivere Farbstoff 2.2 beginnt nach Zugabe des Fixiermittels bei 30°C sofort mit der Cellulosefaser zu reagieren. Wenn die Hauptreaktion sich verlangsamt, beginnt die Aufheizphase auf die Endtemperatur von 60°C, während der eine erneute Reaktionsbeschleunigung beobachtet wird.

Kurze Zeit nach dem 60°C erreicht sind, geht die Fixierkurve in den waagerechten Teil über; die Färbung ist beendet.

Der weniger reaktive Farbstoff 1.5 reagiert bei den gewählten Startbedingungen zunächst langsam mit der Faser. Während der Aufheizphase tritt jedoch eine deutliche Steigerung der Reaktionsgeschwindigkeit ein.

Wird die Färbung mit einer Mischung der Farbstoffe 2.2 und 1.5 durchgeführt, dann zeigen die Einzelkomponenten in der Mischung ein gegenüber dem Typfarbstoff harmonischeres Aufziehverhalten, welches sich in einer gegenüber der Fixierkurve von 2.2 flacheren und gegenüber der Aufziehkurve 1.3 steileren Fixierkurve äußert. D.h. der reaktionsträgere Farbstoff 1.5 fixiert in der Mischung bei gleichen Fixierbedingungen schneller als seinem Fixierverhalten als Typ entspricht.

### Beispiel 4

100 Teile einer Baumwollwirkware werden auf einem Jetfärbeaggregat bei 30°C mit 1000 Teilen einer wäßrigen Flotte behandelt, welche
5 Teile der Reaktivfarbstoffmarineblaumischung bestehend aus
   32 Teilen des Farbstoffs 3.3
   55 Teilen des Farbstoffs 1.6
   13 Teilen des Farbstoffs 4.1 sowie
0,5 Teile Natriumbicarbonat
20 Teile Soda (wasserfrei)
60 Teile Natriumchlorid
gelöst enthält.

Die Farbstoffe entsprechen den Formeln:

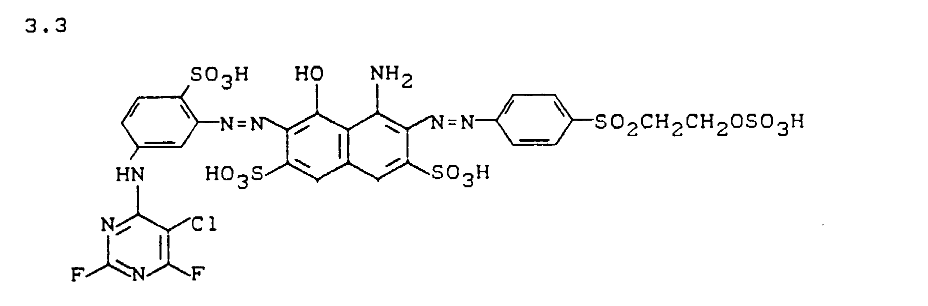

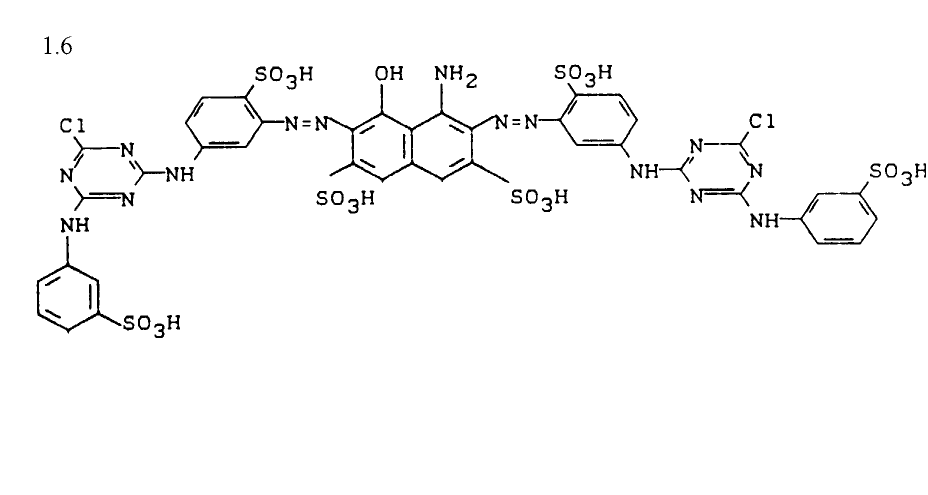

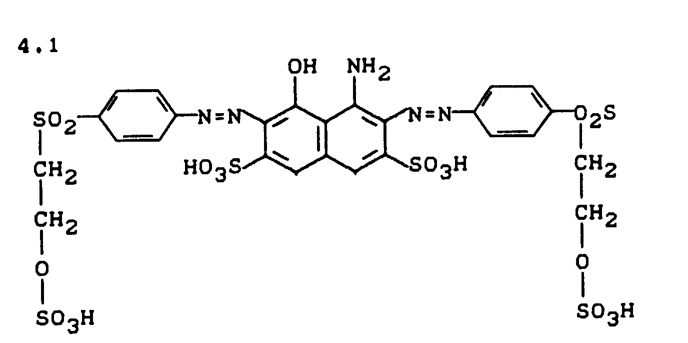

Nach gleichmäßiger Verteilung des aufgezogenen Farbstoffs auf dem Cellulosefasermaterial wird über 30 Minuten gleichmäßig auf 60° erwärmt und weitere 90 Minuten bei dieser Temperatur unter lebhafter Flottenzirkulation und Warenbewegung gefärbt.

Danach wird abgelassen, zweimal kalt und warm gespült und zweimal je 15 Minuten kochend behandelt. Man erhält eine egale Marineblaufärbung mit guten Echtheitseigenschaften.

### Beispiel 5

1000 Teile einer wäßrigen Färbeflotte werden bei 30°C mit 100 Teilen Baumwollwirkware und 2 Teilen Reaktivfarbstoffmischung versetzt. Die Mischung besteht aus je 1 Teil des Farbstoffs 2.2 und 1.7 der Formeln

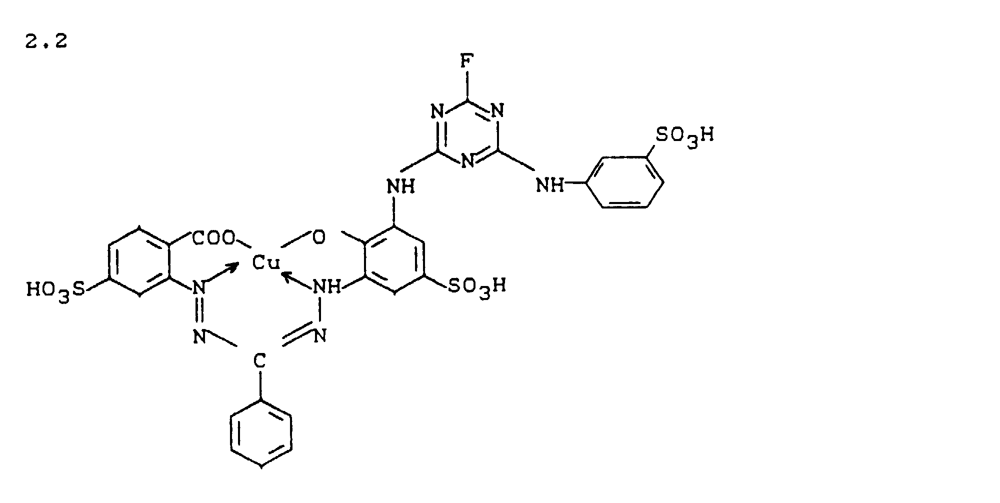

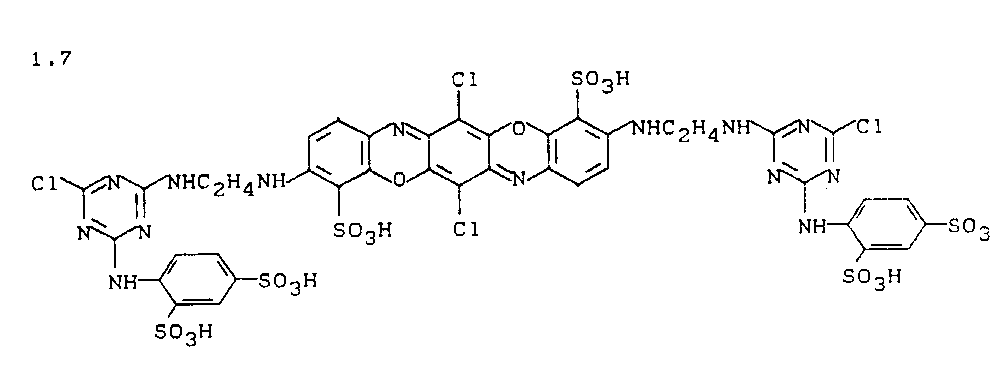

Nachdem sich die Farbstoffmischung gleichmäßig in der Flotte und auf der Baumwolle verteilt hat, werden 50 Teile Natriumchlorid in die Färbeflotte gegeben und anschließend 20 Teile Natriumcarbonat hinzugefügt. Die Färbeflotte wird bei lebhafter Flotten- und Warenbewegung innerhalb von 30 Minuten auf 60°C erwärmt und bei dieser Temperatur 90 Minuten belassen.

Danach wird die Flotte abgelassen, zweimal bei 50°C und zweimal bei 80°C gespült. Anschließend wird 15 Minuten kochend geseift und kalt gespült. Man erhält eine egale Blaufärbung mit guten Echtheitseigenschaften.

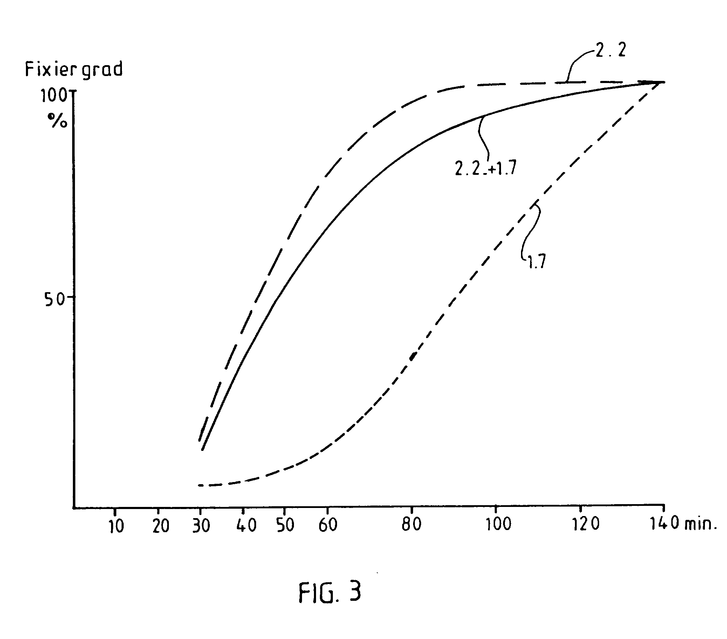

Werden die Einzelfarbstoffe der Farbstoffmischungen gefärbt, so ergeben sich die in Fig. 3 dargestellten Fixierkurven.

Der höherreaktive Farbstoff 2.2 beginnt nach Zugabe des Fixiermittels bei 30°C sofort mit der Cellulosefaser zu reagieren. Wenn die Hauptreaktion sich verlangsamt, beginnt die Aufheizphase auf die Endtemperatur von 60°C, während der eine erneute Reaktionsbeschleunigung beobachtet wird.

Kurze Zeit nach dem 60°C erreicht sind, geht die Fixierkurve in den waagerechten Teil über; die Färbung ist beendet.

Der weniger reaktive Farbstoff 1.7 reagiert bei den gewählten Startbedingungen zunächst langsam mit der Faser. Während der Aufheizphase tritt jedoch eine deutliche Steigerung der Reaktionsgeschwindigkeit ein.

Wird die Färbung mit einer Mischung der Farbstoffe durchgeführt, dann zeigen die Einzelkomponenten in der Mischung ein gegenüber dem Typfarbstoff harmonischeres Aufziehverhalten, welches sich in einer gegenüber der Fixierkurve von 2.2 flacheren und gegenüber der Fixierkurve von 1.7 steileren Fixierkurve äußert. D.h., der reaktionsträgere Farbstoff fixiert in der beanspruchten Mischung bei gleichen Fixierbedingungen schneller als seinem Fixierverhalten als Typ entspricht.

### Beispiel 6

100 Teile eines gebleichten Baumwollgarnes werden in einem Garnfärbeapparat mit 900 Teilen einer 60°C warmen wäßrigen Färbeflotte behandelt, welche 1 Teil des Farbstoffs 1.2, 1 Teil des Farbstoffs 3.5, 1 Teil des Farbstoffs 1.7 und 1 Teil des Farbstoffs 2.3 sowie 0,8 Teile Natriumbicarbonat enthält. Die Farbstoffe entsprechen den Formeln

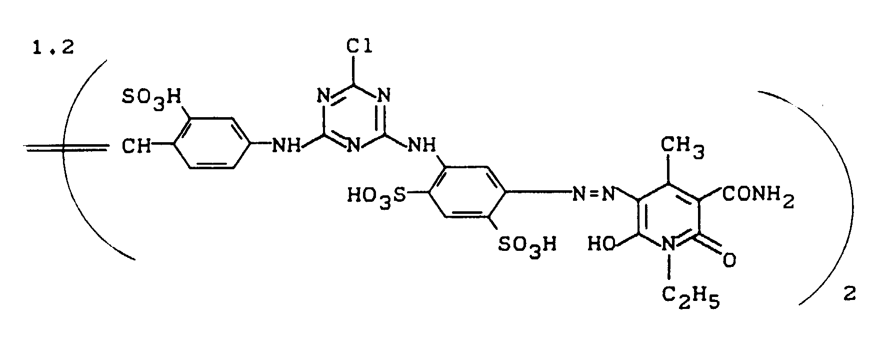

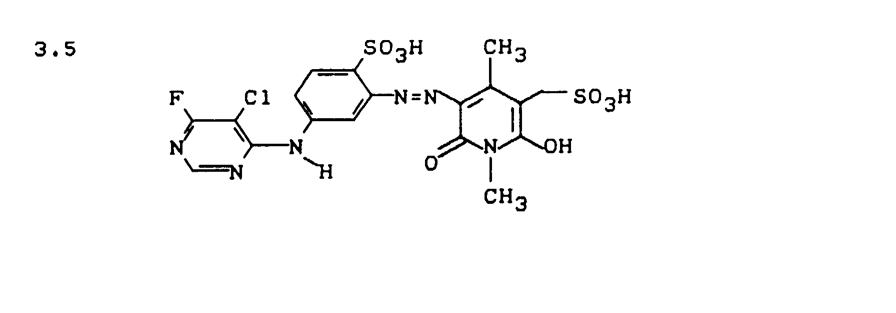

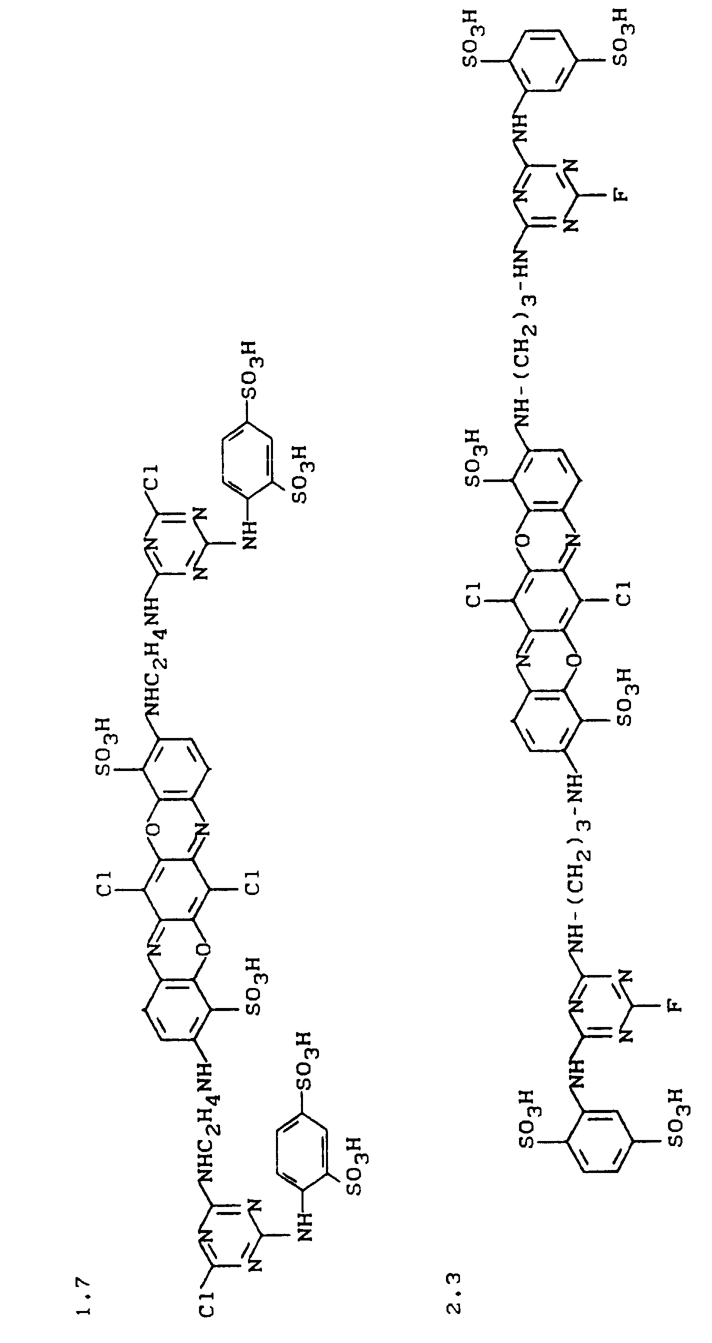

Nachdem sich die Farbstoffmischung gleichmäßig in der Flotte und auf der Baumwolle verteilt hat, werden in zwei Portionen zu je 1/3 und 2/3 der Gesamtmenge im Abstand von 15 Minuten ingesamt 60 Teile wasserfreies Natriumsulfat in die Färbeflotte gegeben und diese weitere 15 Minuten bei 60°C zirkuliet. Daraufhin werden über das Ansatzgefäß des Färbeapparates mittels linearer Dosierung über 1 Stunde 100 Teile einer Alkalilösung bestehend aus 4 Teilen Soda wasserfrei und 2 Teilen Natronlauge 50 % mit Wasser auf 100 Teile aufgefüllt in das Färbebad eindosiert.

Nach Beendigung des Dosiervorganges wird weitere 15 Minuten bei der gleichen Temperatur gefärbt.

Danach wird die Flotte abgelassen, zweimal bei 50°C und zweimal bei 80°C gespült, anschließend wird 10 Minuten kochend extrahiert und kalt gespült. Man erhält eine egale Grünfärbung mit guten Echtheitseigenschaften.

### Beispiel 7

100 Teile einer gebleichten Baumwollwirkware werden auf einer Haspelkufe mit 2000 Teilen einer 60°C warmen wäßrigen Färbeflotte behandelt, welche 0,7 Teile des Farbstoffs 1.1, 0,54 Teile des Farbstoffs 1.4 und 0,8 Teile des Farbstoffs 1.5 sowie 0,72 Teile des Farbstoffs 3.1, 0,61 Teile des Farbstoffs 2.1, 0,29 Teile des Farbstoffs 2.2 und 0,30 Teile des Farbstoffs 3.4 und außerdem 0,5 Teile eines kommerziellen Netzmittels und 2 Teile eines kommerziellen Färbehilfsmittels zur Verbesserung der Warenverlegung in der Maschine enthält. Die Farbstoffe entsprechen den Formeln

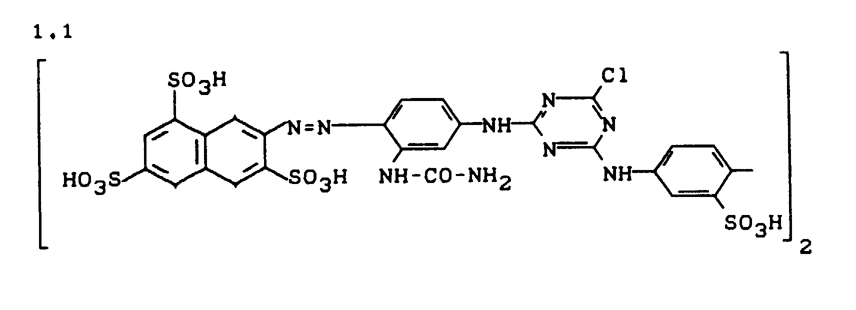

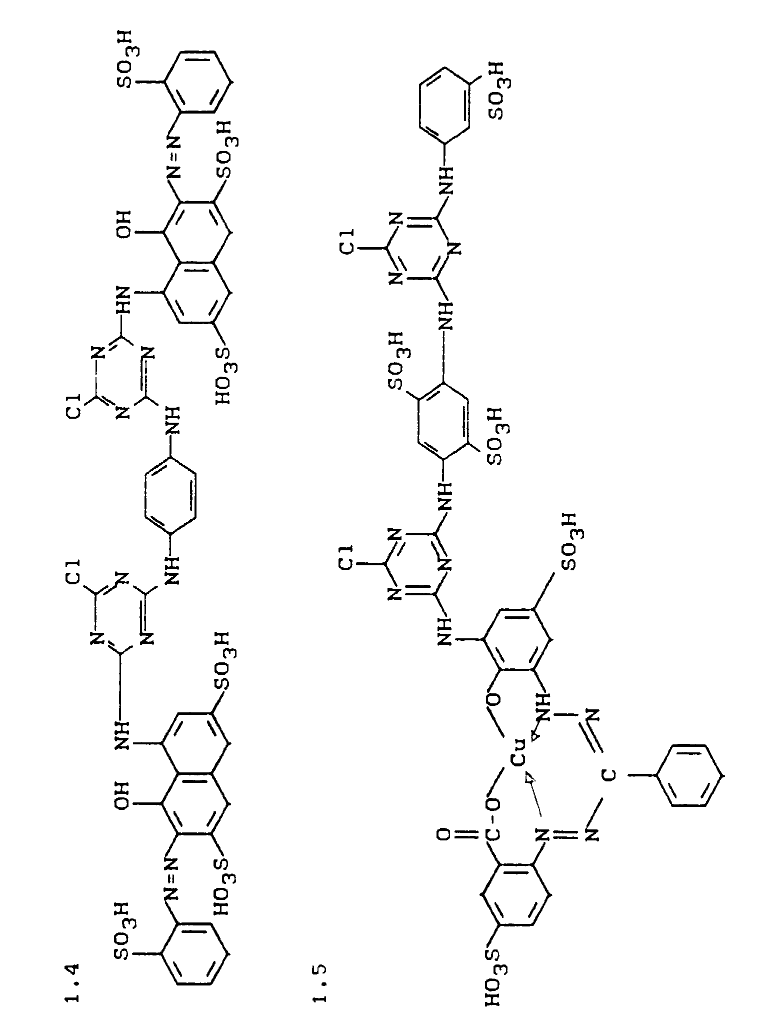

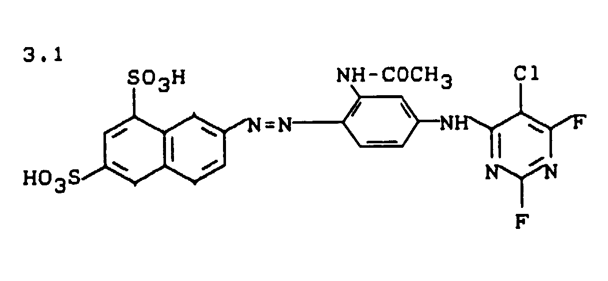

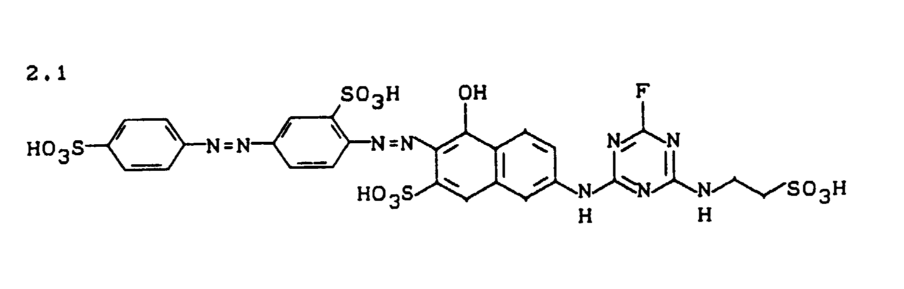

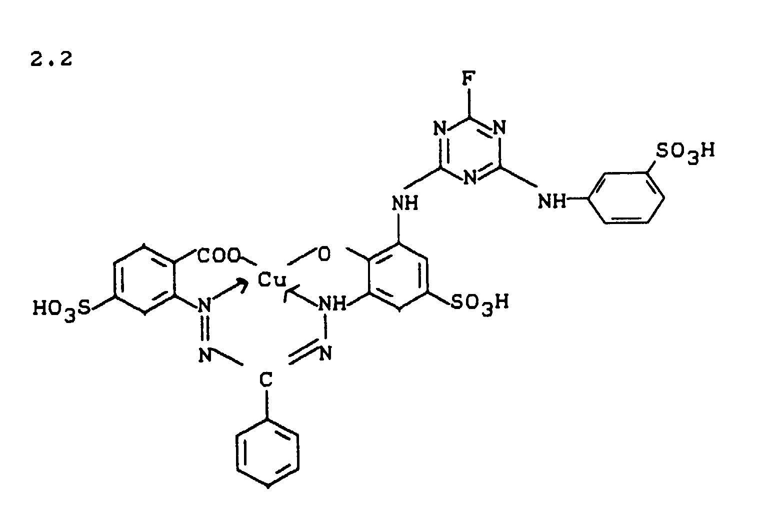

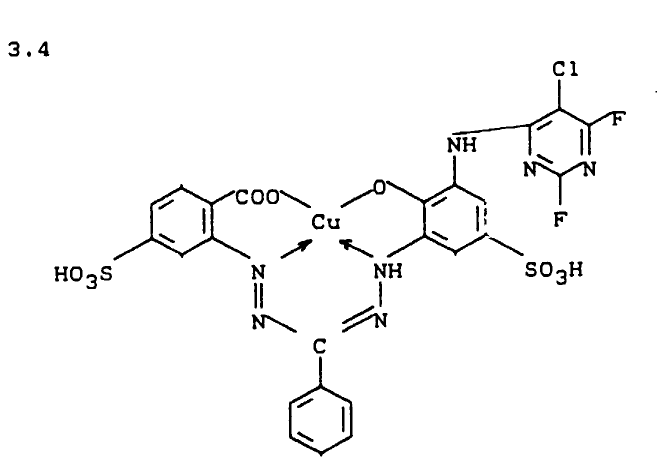

Der Flotte werden 0,8 Teile Natriumbicarbonat zugesetzt. Nachdem sich die Farbstoffmischung gleichmäßig in der Flotte und auf der Baumwolle verteilt hat, werden 50 Teile Kochsalz in 4 Portionen zu je 1/10, 2/10, 3/10 und 4/10 der Gesamtmenge im Abs and von je 10 Minuten in die Flotte gegeben und weitere 10 Minuten bei 60°C laufengelassen. Daraufhin werden 20 Teile Soda in fester Form in zwei Portionen zu 2/10 und 8/10 der Gesamtmenge im Abstand von 30 Minuten langsam in das Färbebad eingegeben und anschließend in 20 Minuten auf 80°C erwärmt und 30 Minuten bei dieser Temperatur gefärbt.

Danach wird die Flotte abgelassen, zweimal bei 50°C und zweimal bei 80°C gespült, anschließend 15 Minuten kochend extrahiert und kalt gespült.

Man erhält eine tiefe Braunfärbung mit guten Echtheitseigenschaften.

## Patentansprüche

1. Farbstoffmischung aus wenigstens zwei Reaktivfarbstoffen, dadurch gekennzeichnet, daß wenigstens ein Monochlortriazinfarbstoff 1 der Formeln 1.1 bis 1.7 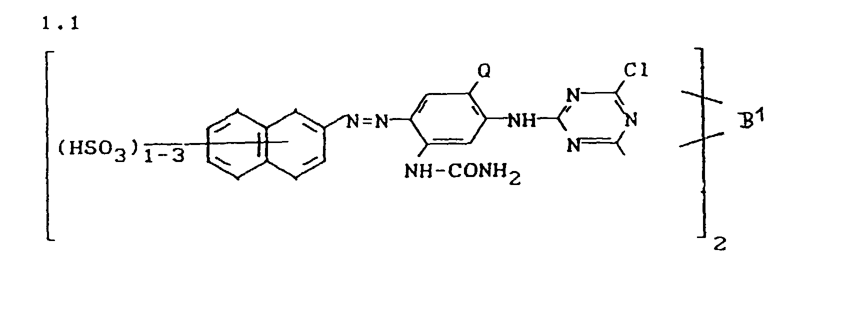 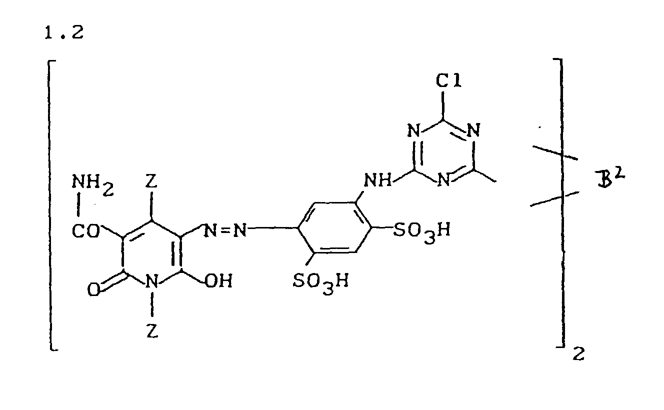 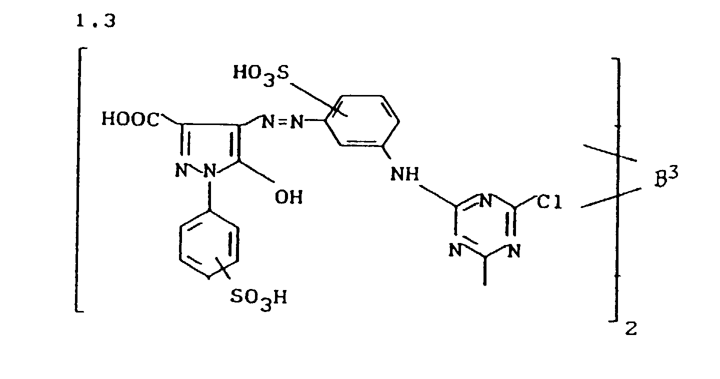 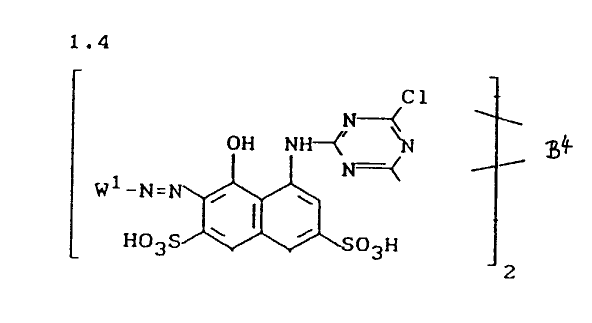 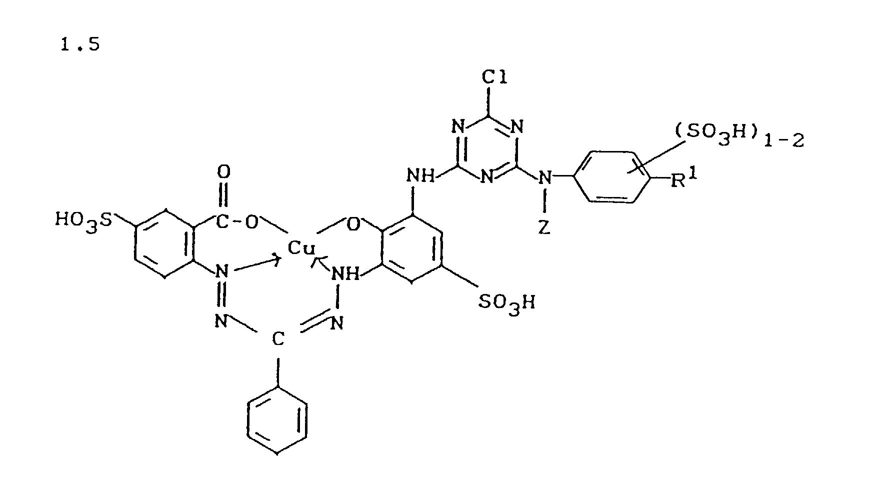 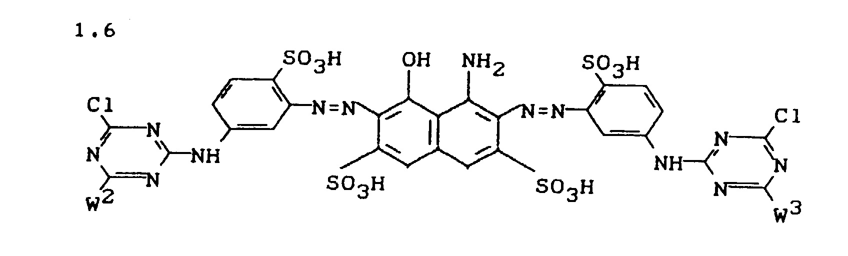 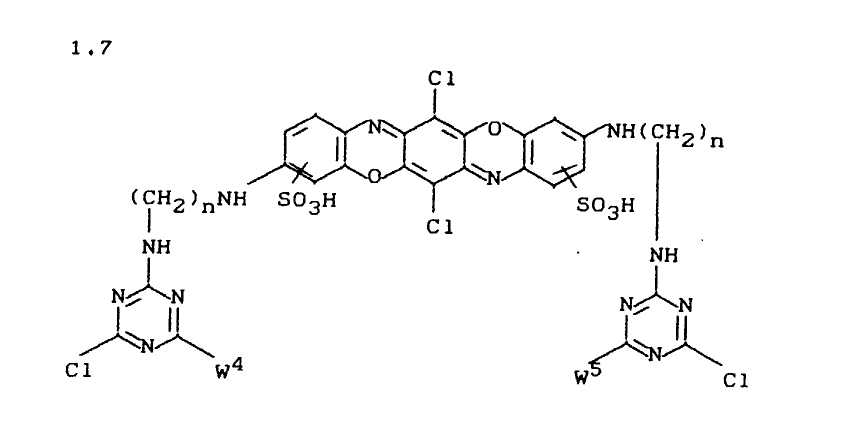 und wenigstens ein Monofluortriazinfarbstoff der Formel 2.1 bis 2.7 und/oder ein Fluorchlorpyrimidinfarbstoff der Formel 3.1 bis 3.5 verwendet werden 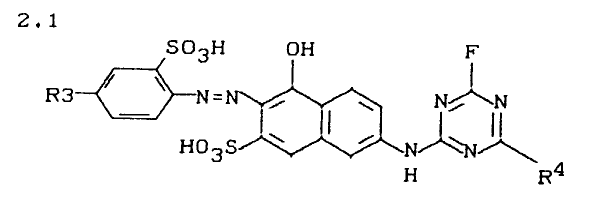 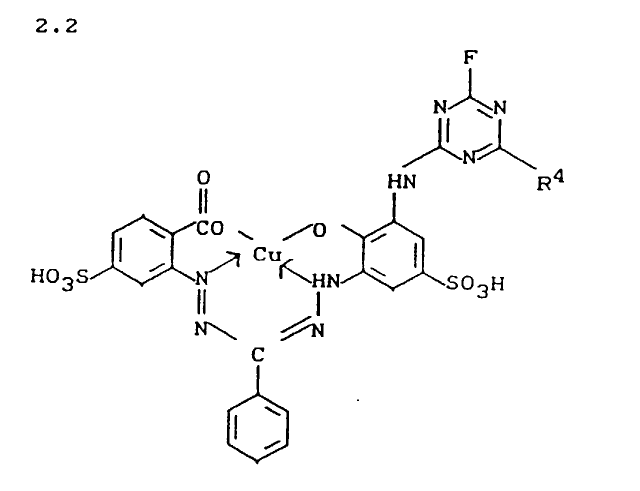 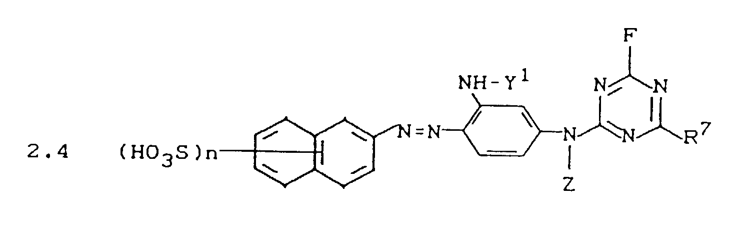 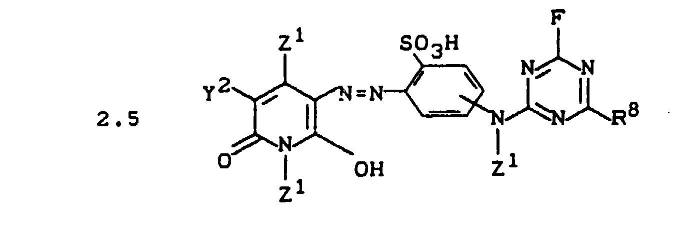 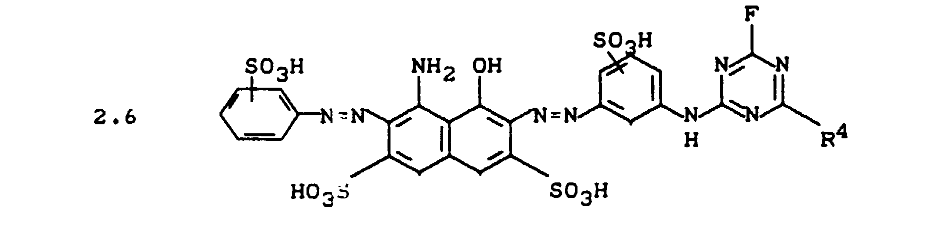 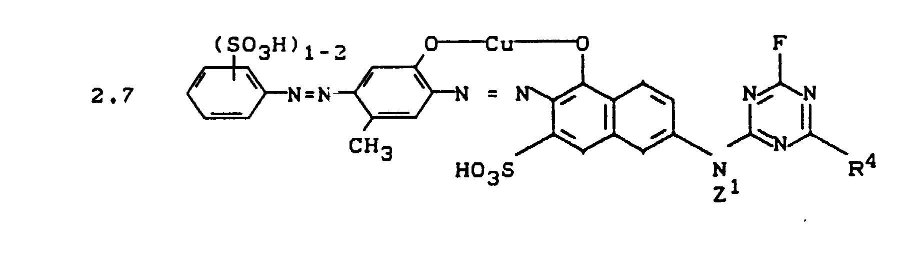 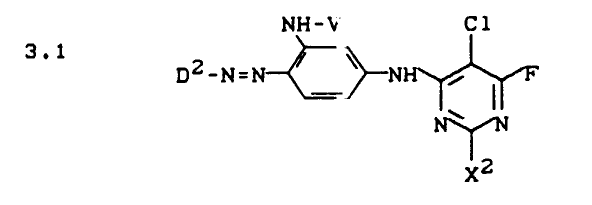 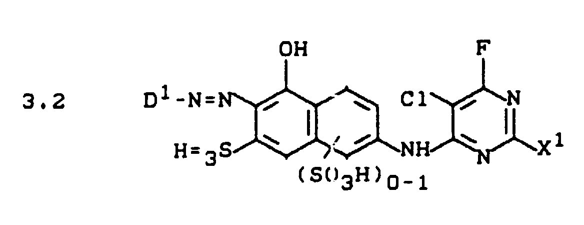 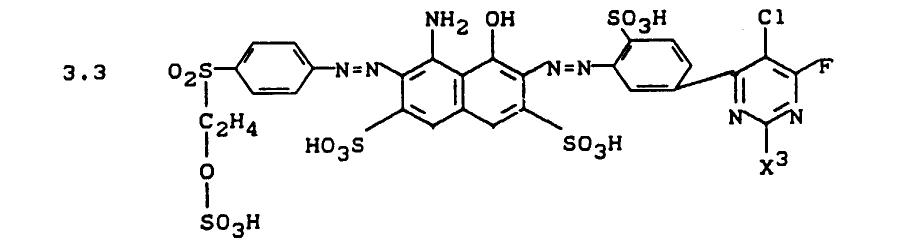 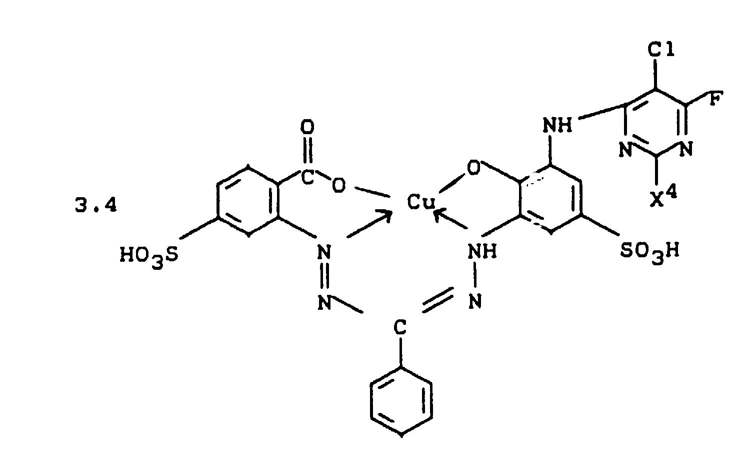 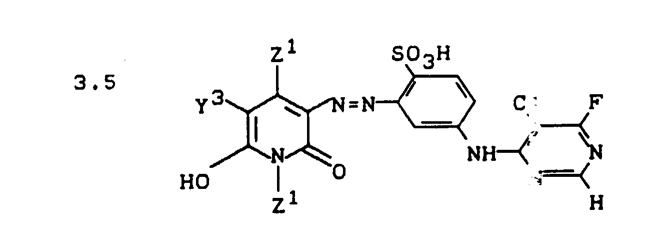 worin bedeuten
B¹-B⁴ unabhängig voneinander 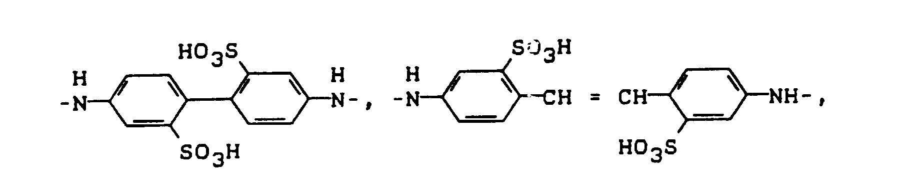 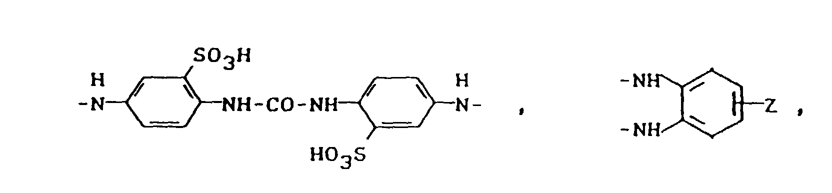 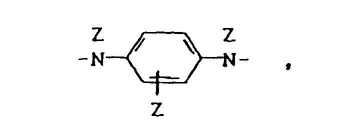
Q = O-CH₃ oder H
R¹ = -SO₂-CH₂-CH₂OSO₃H oder 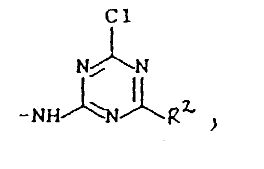
R² = -NH-Z, -NH-CH₂-CH₂-SO₃H, 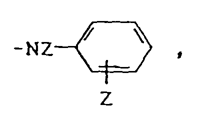 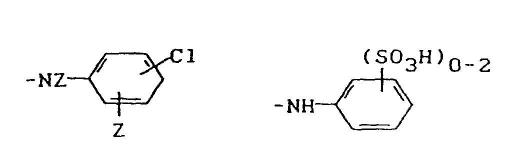
R³ = 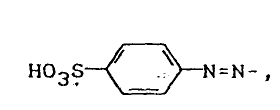 H₃CO-
R⁴, R⁵, R⁷ und R⁸ = unabhängig voneinander -NH-Z¹, -NH-CH₂-CH₂-SO₃H, 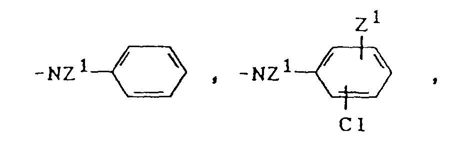 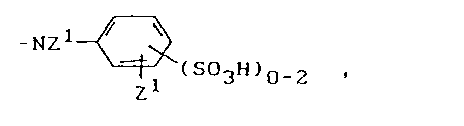
Z = unabhängig voneinander H oder C₂-C₄-Alkyl,
Z¹ = unabhängig voneinander H, C₁-C₄-Alkyl,
V = unabhängig voneinander CONH₂, COCH₃,
W¹ = 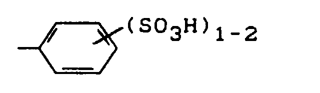
W²-W⁵ = unabhängig voneinander 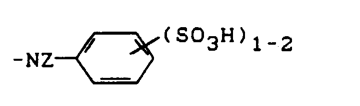
X¹-X⁴ = unabhängig voneinander H, F
Y¹ - Y³ = -CONH₂-, COCH₃, -(CH₂)ₘ-SO₃H,
D¹, D² = 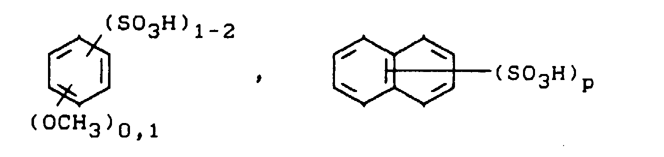 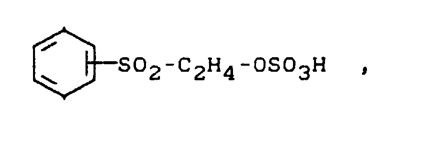
m = unabhängig voneinander 1-4,
n = unabhängig voneinander 2-4,
p = unabhängig voneinander 1-3.

2. Mischung nach Anspruch 1, dadurch gekennzeichnet, daS zusätzlich der Farbstoff 4.1 folgender Formel enthalten ist

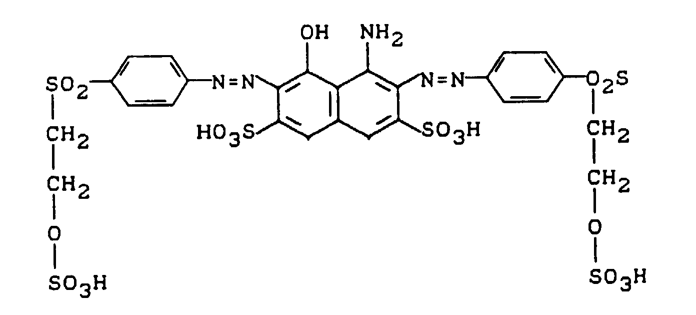

3. Mischung nach wenigstens einem der vorhergehenden Ansprüche, dadurch gekennzeichnet, daß enthalten sind, bezogen auf die Summe der Farbstoffe
| | |
|---|---|
| Farbstoff 1 | Gew.-% 40 - 60 |
| Farbstoff 2 | Gew.-% 0 - 60 |
| Farbstoff 3 | Gew.-% 0 - 60 |
| Farbstoff 4.1 | Gew.-% 0 - 60 |
wobei wenigstens einer der Farbstoffe 2 und 3 vorhanden ist.

4. Mischung nach wenigstens einem der vorhergehenden Ansprüche, dadurch gekennzeichnet, daß die Farbstoffmischung auf 100 Teile Farbstoffe 1 bis 50 Teile eines anorganischen Salzes enthält.

5. Mischung nach wenigstens einem der vorhergehenden Ansprüche, dadurch gekennzeichnet, daß pro 100 Teile Farbstoff 1 bis 5 Teile eines anorganischen Puffers, 0,5 bis 10 Teile eines Dispergiermittels und 0,5 bis 5 Teile eines Entstaubungsmittels enthalten sind und die Mischung einen pH-Wert von 6,5 bis 7,5 aufweist.

6. Verfahren zum Färben von Cellulosefasern oder Cellulose enthaltenden Fasermischungen, dadurch gekennzeichnet, daß eine Reaktivfarbstoffmischung gemäß wenigstens einem der vorhergehenden Ansprüche verwendet wird.

7. Farbstoffmischung enthaltend Farbstoffe der Formeln

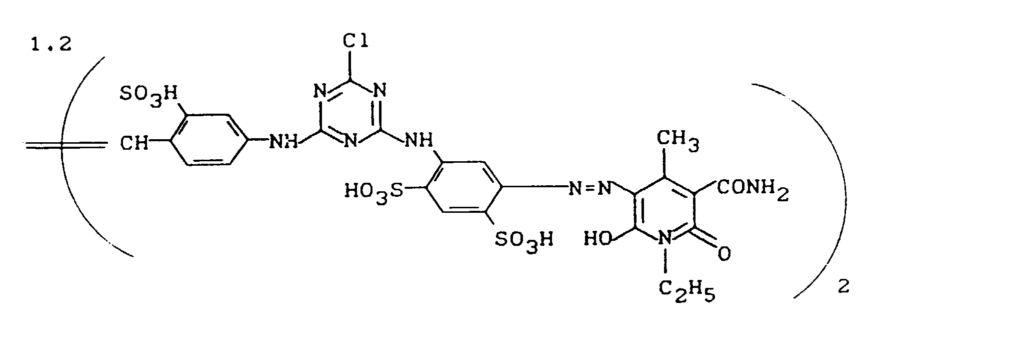

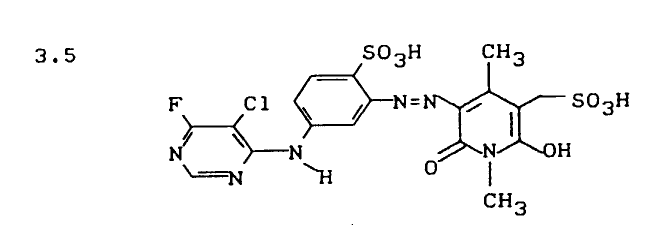

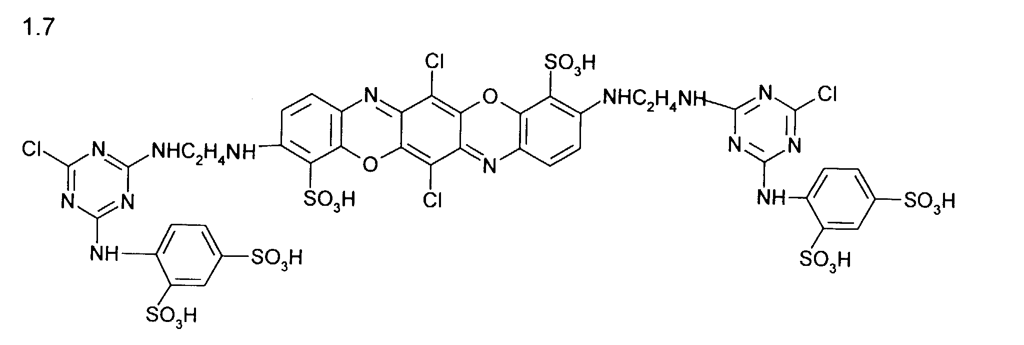

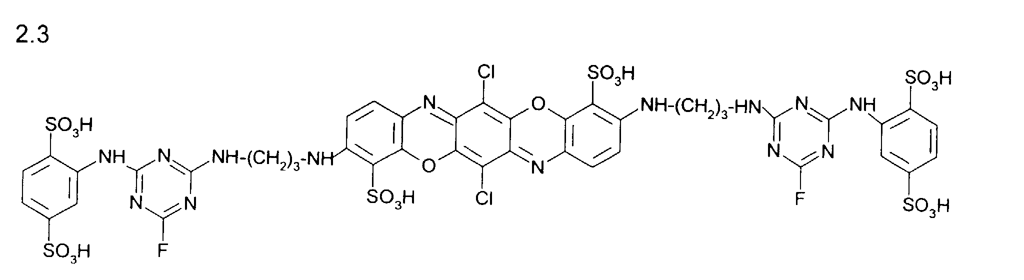

## Claims

1. Dyestuff mixture of at least two reactive dyestuffs, characterised in that at least one monochlorotriazine dyestuff 1 of the formulae 1.1 to 1.7 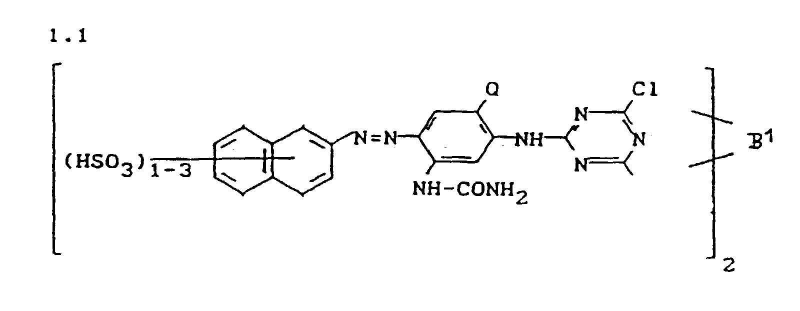 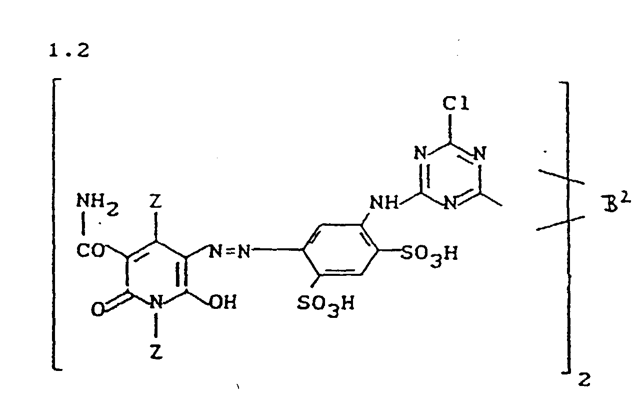 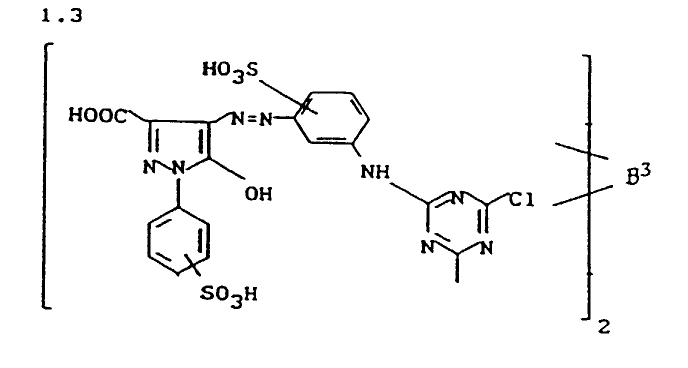 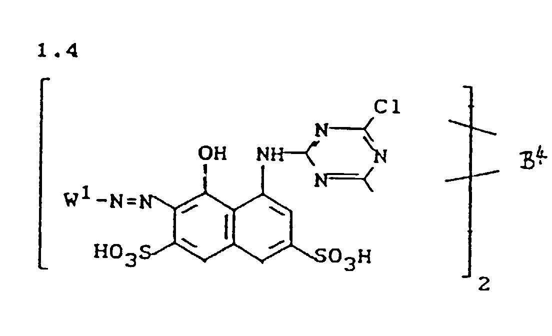 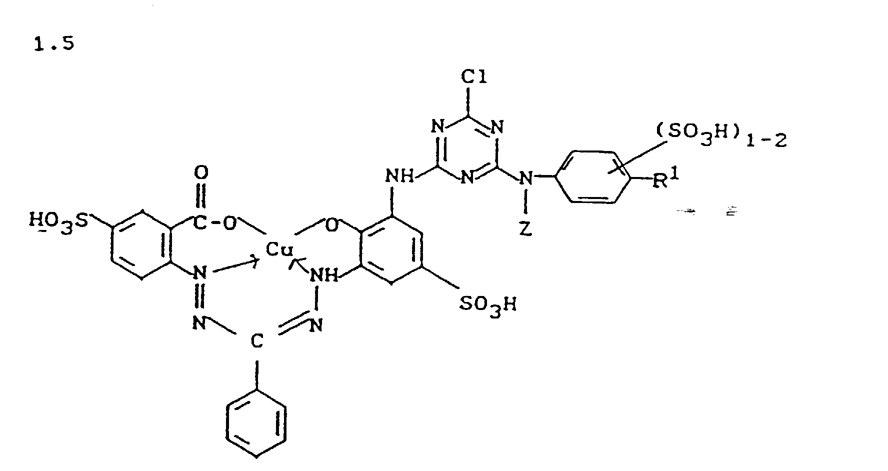 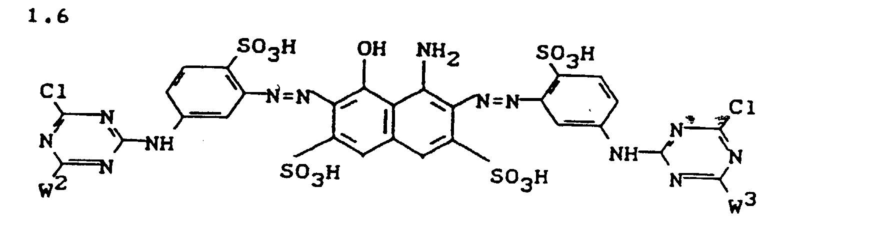 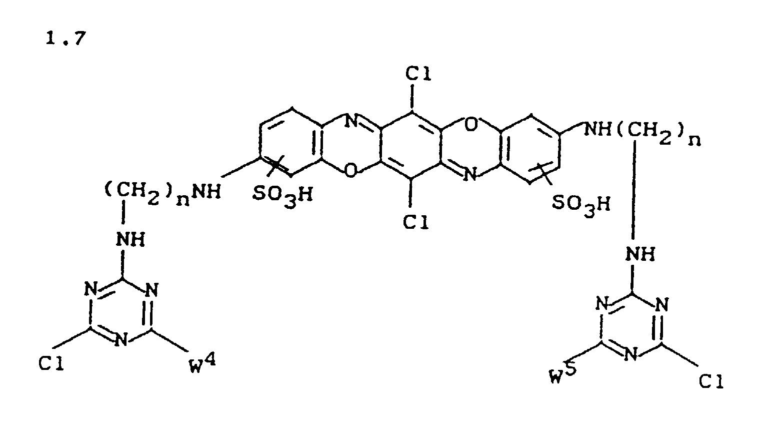 and at least one monofluorotriazine dyestuff of the formula 2.1 to 2.7 and/or one fluorochloropyrimidine dyestuff of the formula 3.1 to 3.5 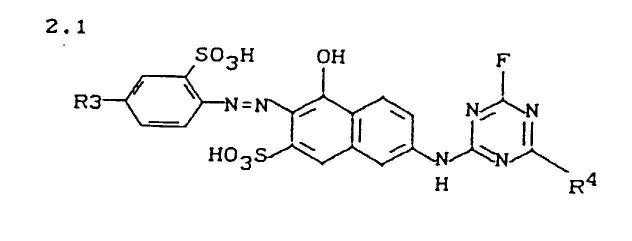 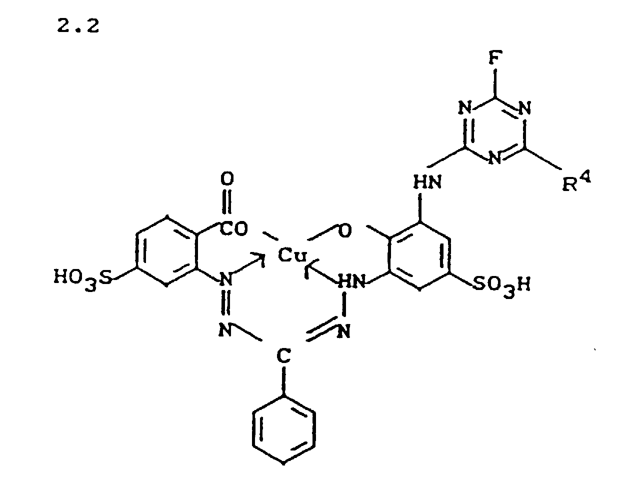 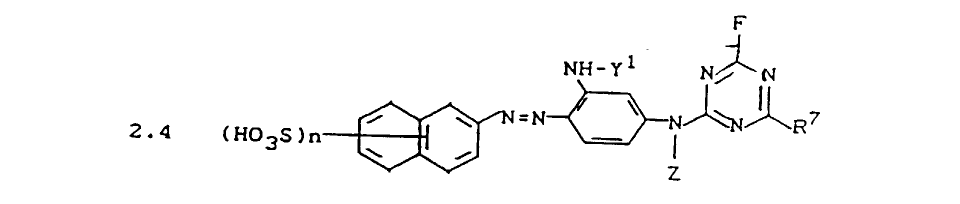 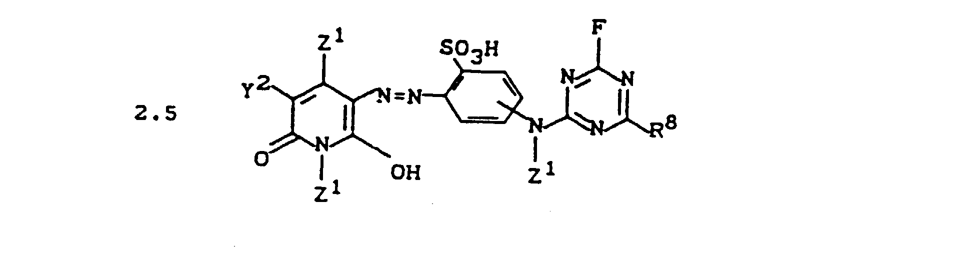 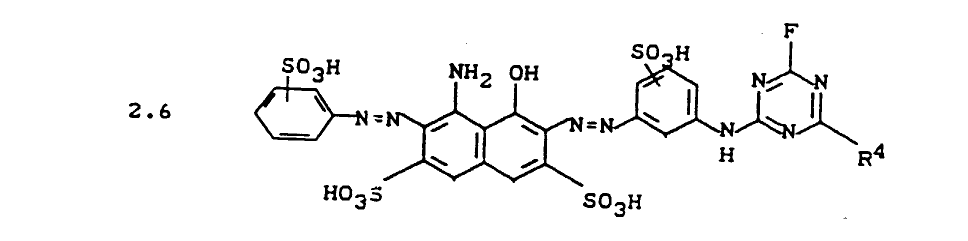 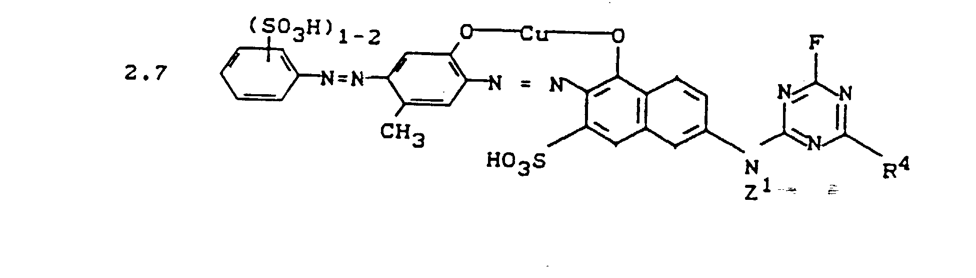 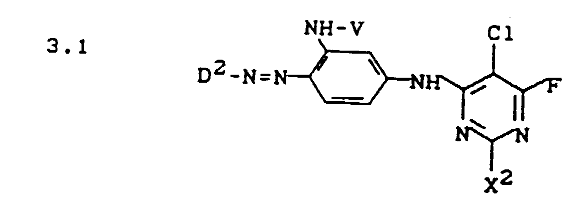 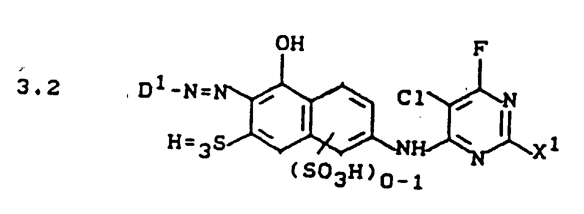 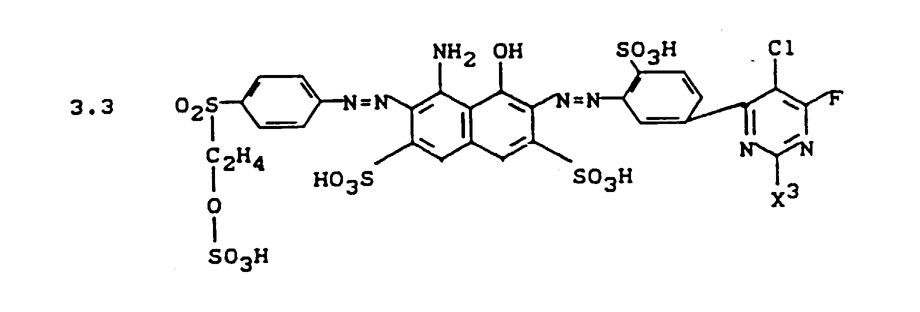 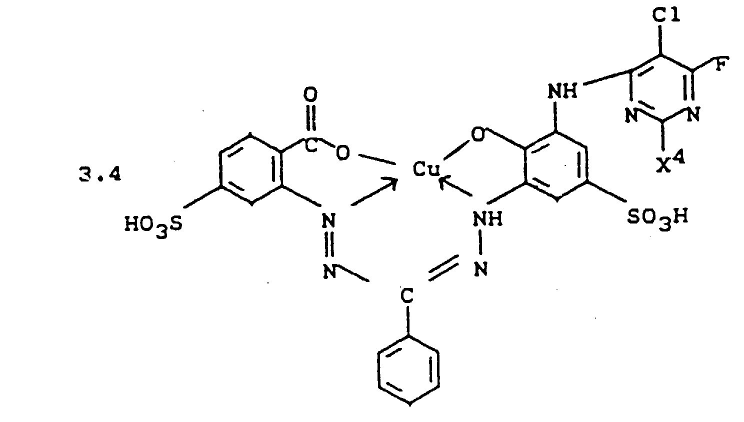 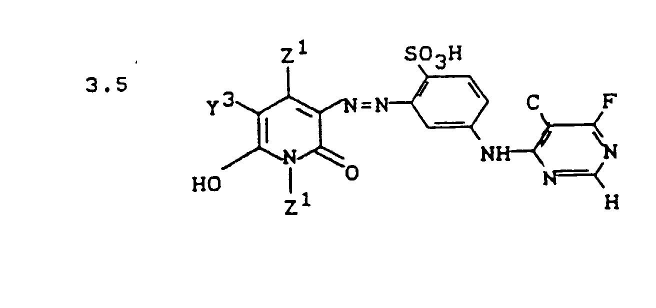 are used, wherein
B¹-B⁴ independently of one another denote 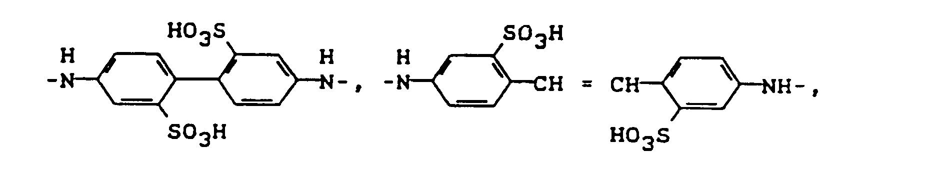 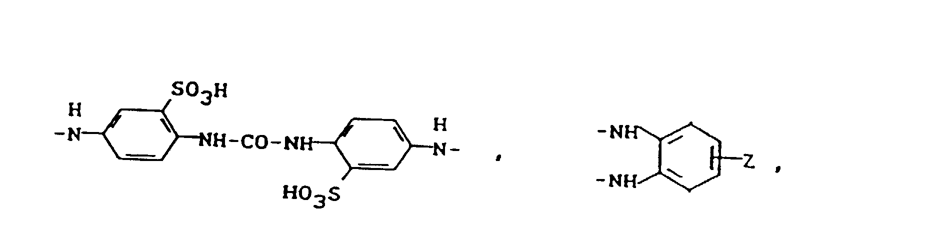 or 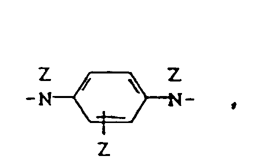
Q denotes O-CH₃ or H,
R¹ denotes -SO₂-CH₂-CH₂OSO₃H or 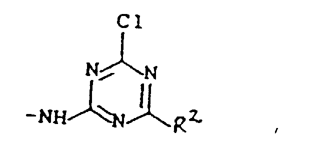
R² denotes -NH-Z,-NH-CH₂-CH₂-SO₃H, 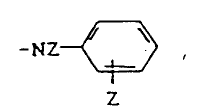 or 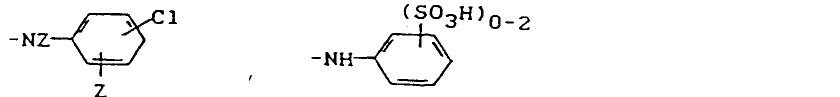
R³ denotes 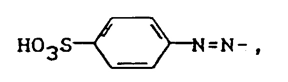 or H₃CO-,
R⁴, R⁵, R⁷ and R⁸ independently of one another denote -NH-Z¹, -NH-CH₂-CH₂-SO₃H, 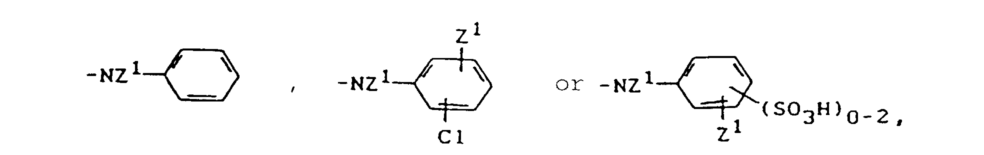
the radicals Z independently of one another denote H or C₂-C₄-alkyl,
the radicals Z¹ independently of one another denote H or C₁-C₄-alkyl,
the radicals V independently of one another denote CONH₂ or COCH₃,
W¹ denotes 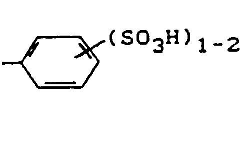
W²-W⁵ independently of one another denote 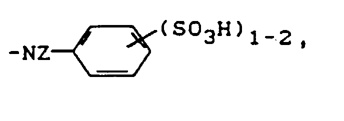
X¹-X⁴ independently of one another denote H or F,
Y¹-Y³ denote -CONH₂-, COCH₃ or -(CH₂)ₘ-SO₃H,
D¹ and D² denote 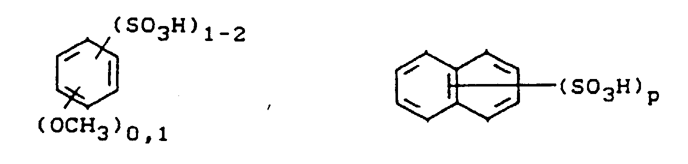 or 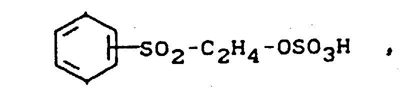
the indices m independently of one another denote 1-4,
the indices n independently of one another denote 2-4 and
the indices p independently of one another denote 1-3.

2. Mixture according to Claim 1, characterised in that It additionally comprises the dyestuff 4.1 of the following formula

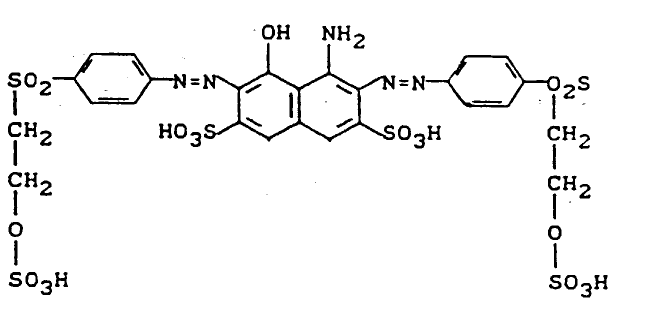

3. Mixture according to at least one of the preceding claims, characterised in that it comprises the following, based on the sum of the dyestuffs
| | |
|---|---|
| Dyestuff 1 | 40 - 60 % by weight |
| Dyestuff 2 | 0 - 60 % by weight |
| Dyestuff 3 | 0 - 60 % by weight |
| Dyestuff 4.1 | 0 - 60 % by weight |
at least one of the dyestuffs 2 and 3 being present.

4. Mixture according to at least one of the preceding claims, characterised in that the dyestuff mixture comprises 1 to 50 parts of an inorganic salt per 100 parts of dyestuffs.

5. Mixture according to at least one of the preceding claims, characterised in that it comprises 1 to 5 parts of an inorganic buffer, 0.5 to 10 parts of a dispersing agent and 0.5 to 5 parts of a dust removal agent per 100 parts of dyestuff, and the mixture has a pH of 6.5 to 7.5.

6. Process for dyeing cellulose fibres or fibre mixtures comprising cellulose, characterised in that a reactive dyestuff mixture according to at least one of the preceding claims is used.

7. Dyestuff mixture comprising dyestuffs of the formulae

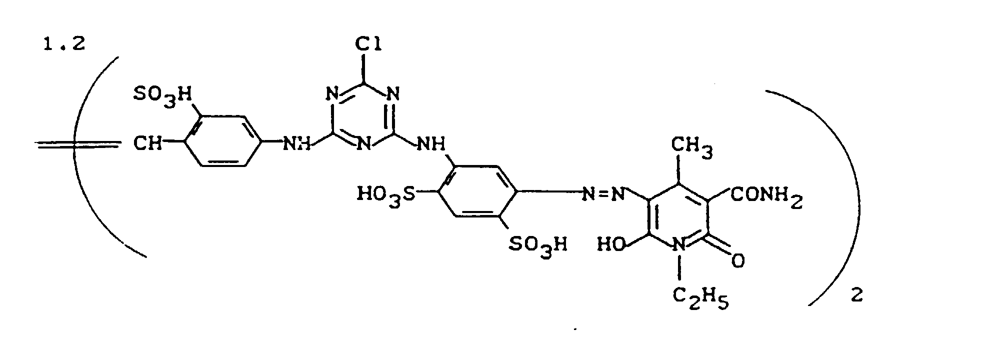

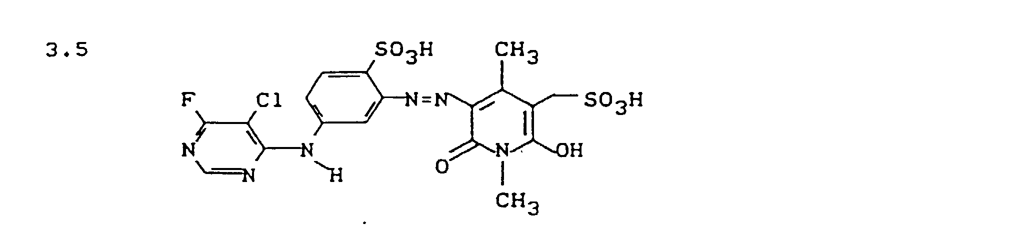

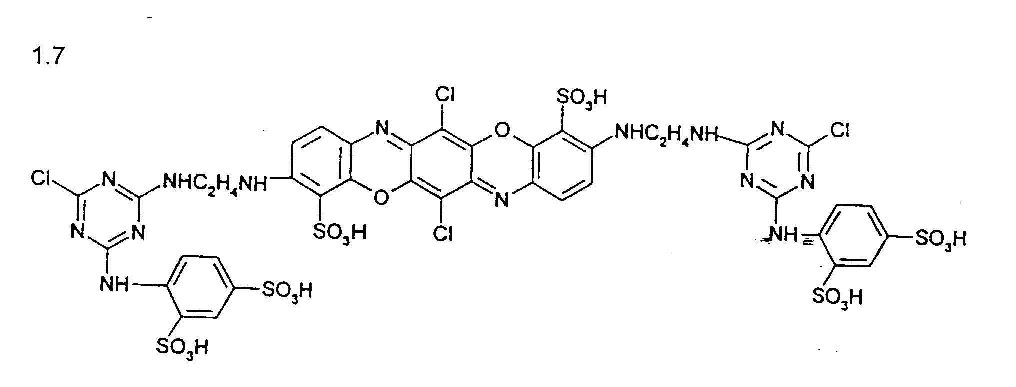

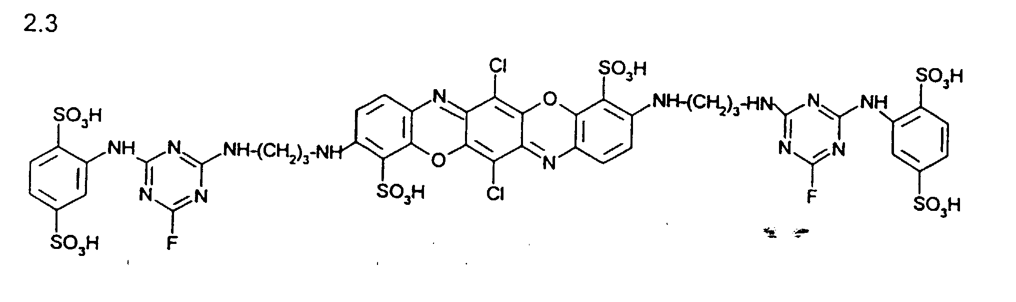

## Revendications

1. Mélange de colorant consistant en au moins 2 colorants réactifs et caractérisé en ce qu'il contient au moins un colorant de monochlorotriazine 1 de formule 1.1 à 1.7 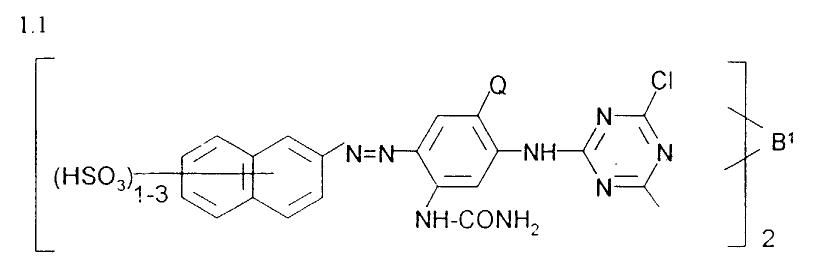 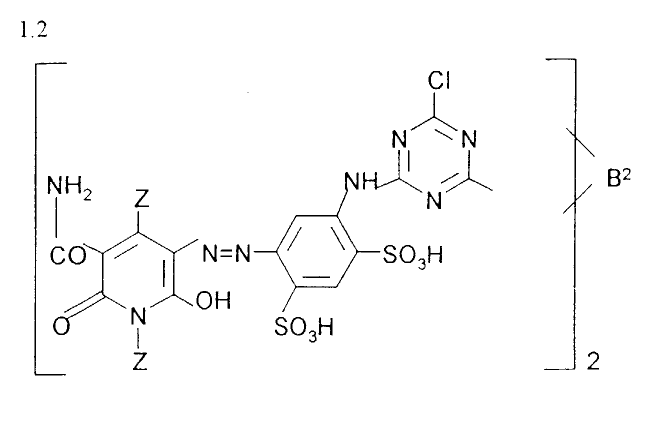 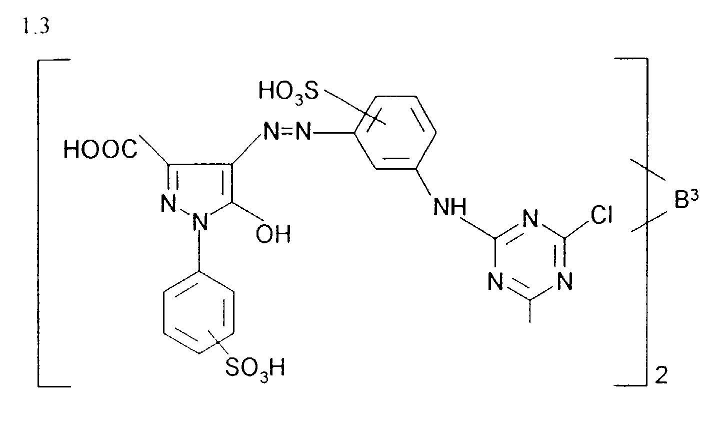 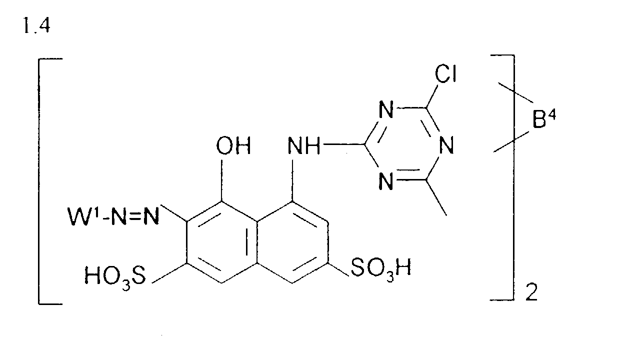 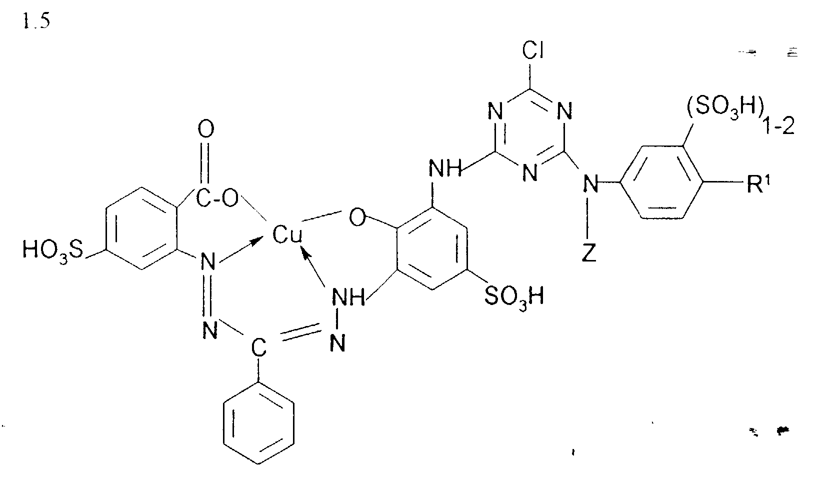 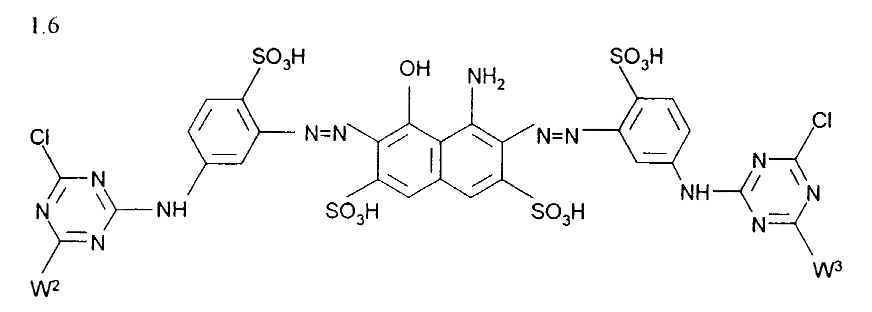 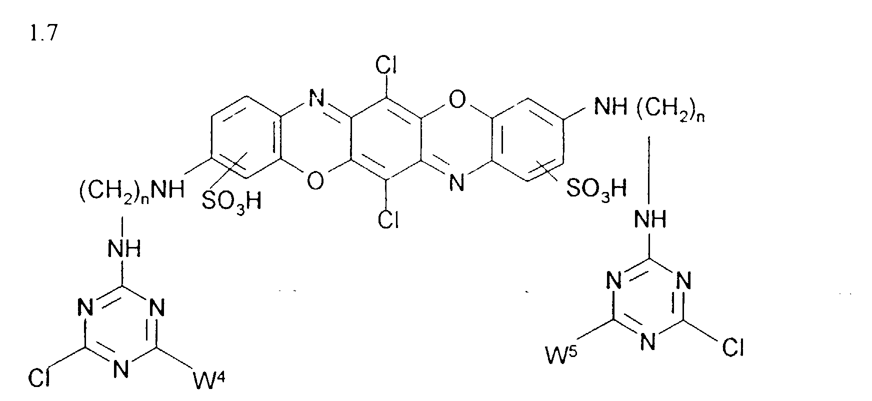 et au moins un colorant de monofluorotriazine de formule 2.1 à 2.7 et/ou un colorant de fluorochloropyrimidine de formule 3.1 à 3.5 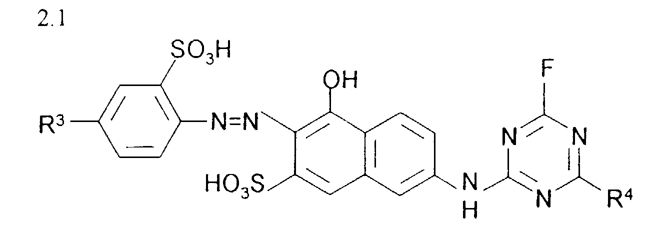 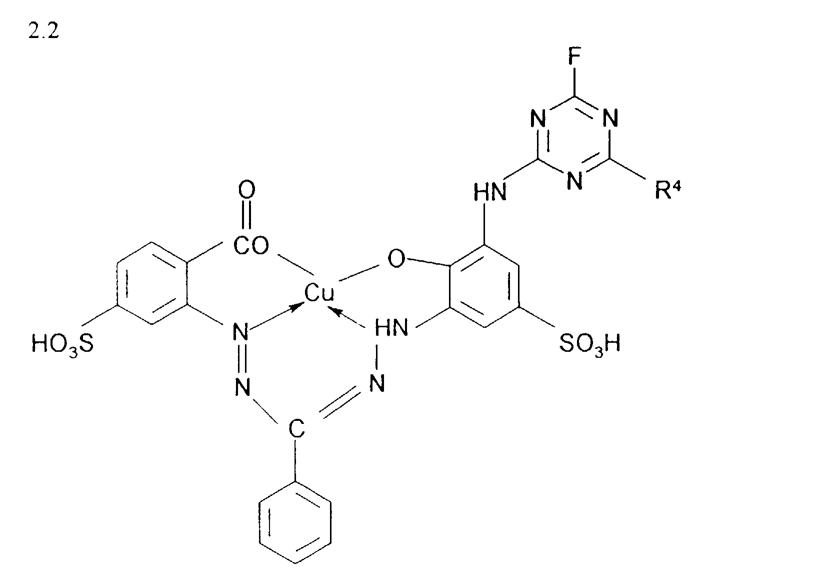 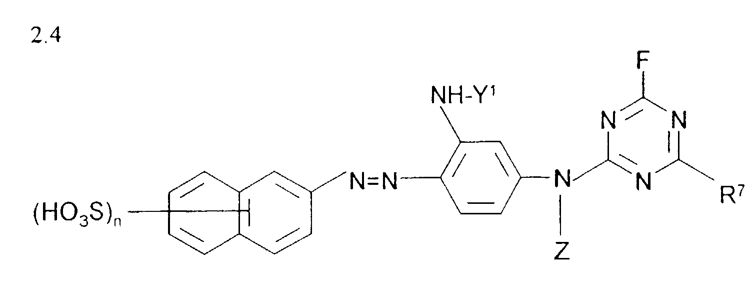 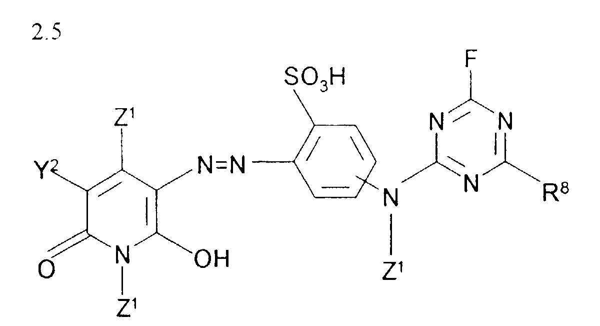 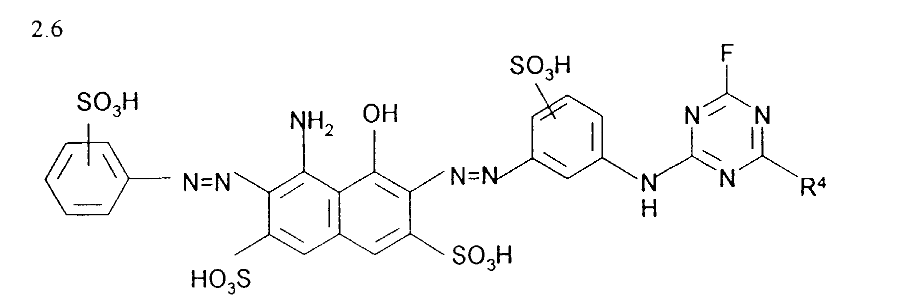 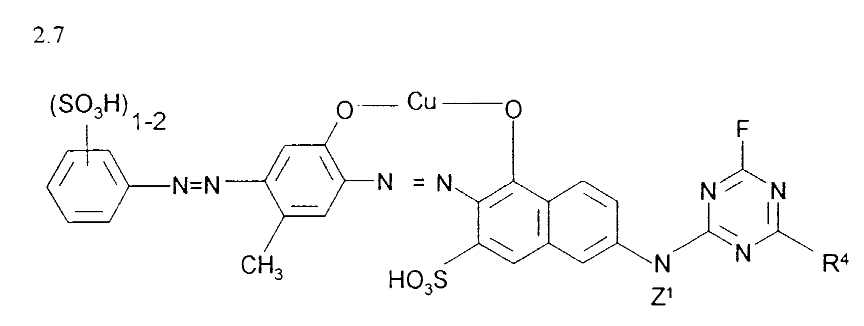 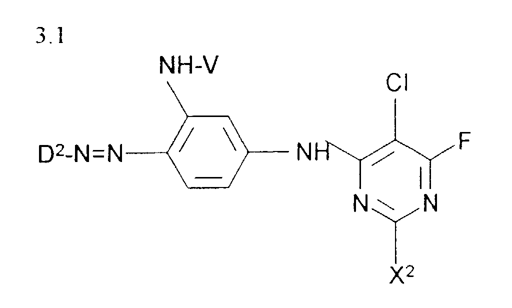 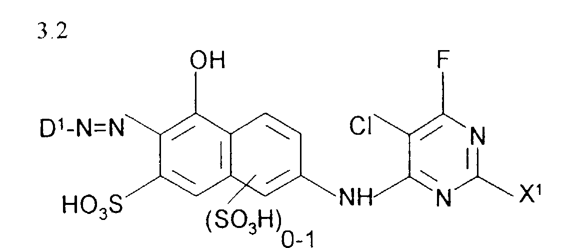 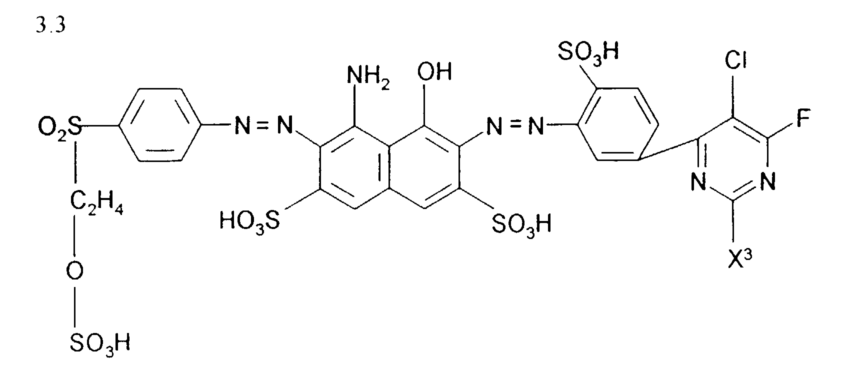 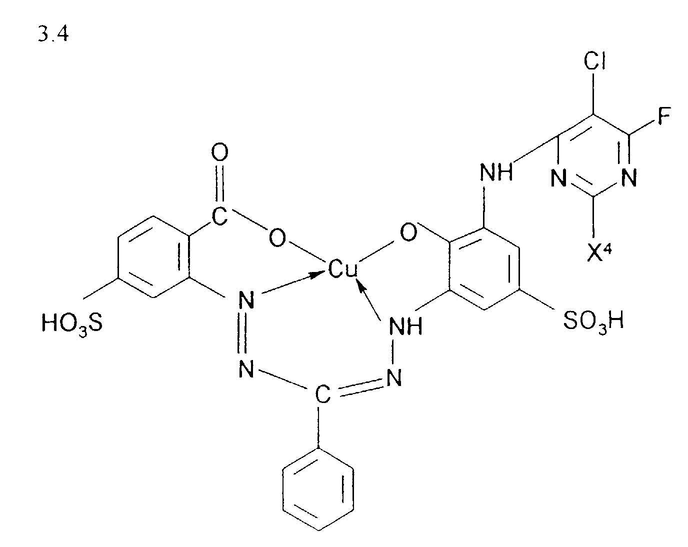 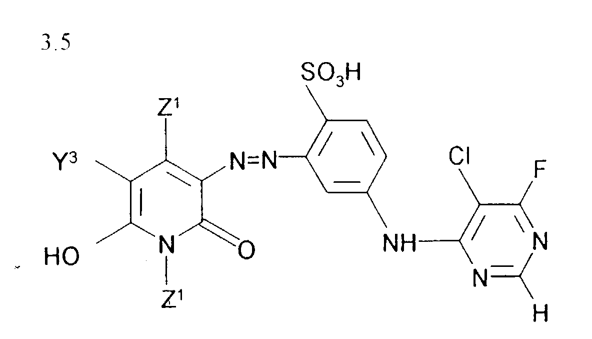 dans lesquelles
B¹ à B⁴ représentent chacun, indépendamment les uns des autres 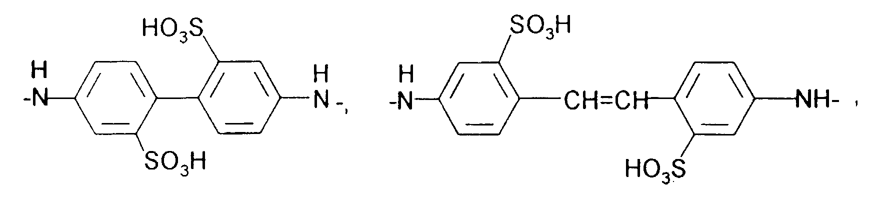 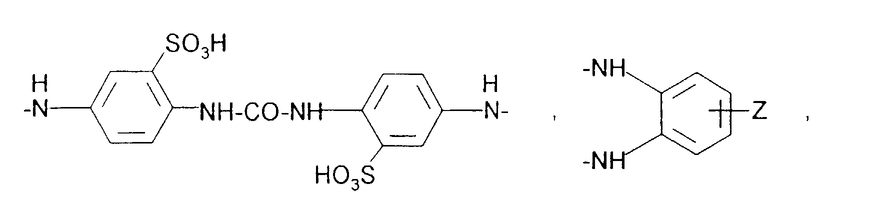 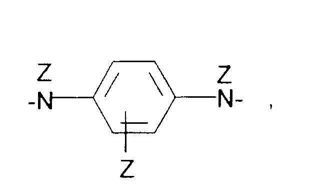
Q = O-CH₃ ou H
R¹ = -SO₂-CH₂-CH₂OSO₃H ou 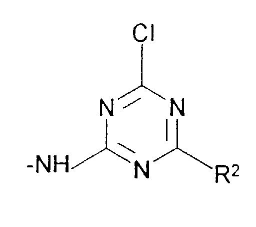
R² = -NH-Z,-NH-CH₂-CH₂-SO₃H_{,} 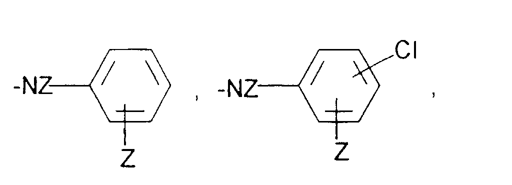 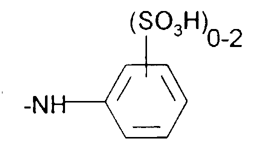
R³ = 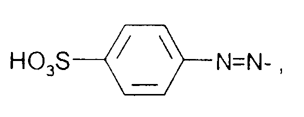 H₃CO-
R⁴, R⁵, R⁷ et R⁸ représentent chacun indépendamment les uns des autres : -NH-Z¹, -NH-CH₂-CH₂-SO₃H, 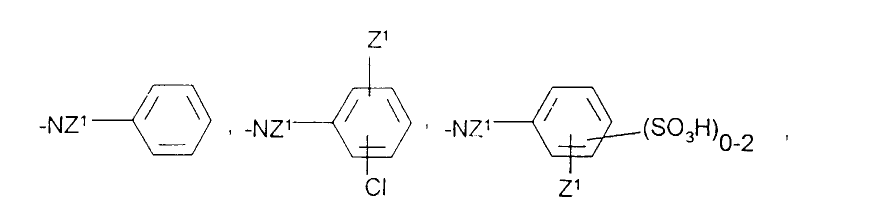
les symboles Z représentent chacun, indépendamment les uns des autres, H ou un groupe alkyle en C₂-C₄,
les symboles Z¹ représentent chacun, indépendamment les uns des autres, H, un groupe alkyle en C₁-C₄,
les symboles V représentent chacun, indépendamment les uns des autres, CONH₂, COCH₃,
W¹ représente 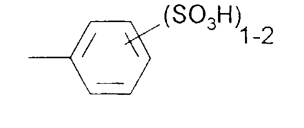
W² à W⁵ représentent chacun, indépendamment les uns des autres, 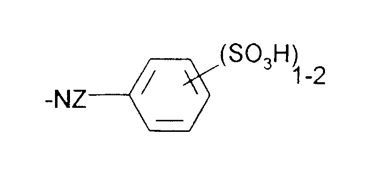
X¹ à X⁴ représentent chacun, indépendamment les uns des autres H, F
Y¹ - Y³ = -CONH₂-, COCH₃, -(CH₂)ₘ-SO₃H,
D¹, D² = 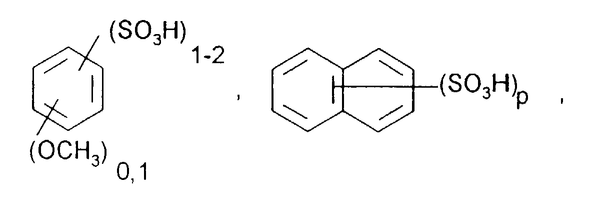 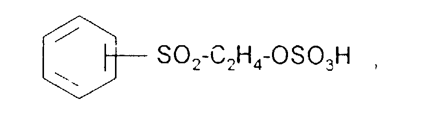
les indices m sont égaux chacun, indépendamment les uns des autres, à un nombre de 1 à 4,
les indices n sont égaux chacun, indépendamment les uns des autres, à un nombre de 2 à 4,
les indices p sont égaux chacun, indépendamment les uns des autres , à un nombre de 1 à 3.

2. Mélange selon revendication 1, caractérisé en ce qu'il contient en outre le colorant 4.1 de formule :

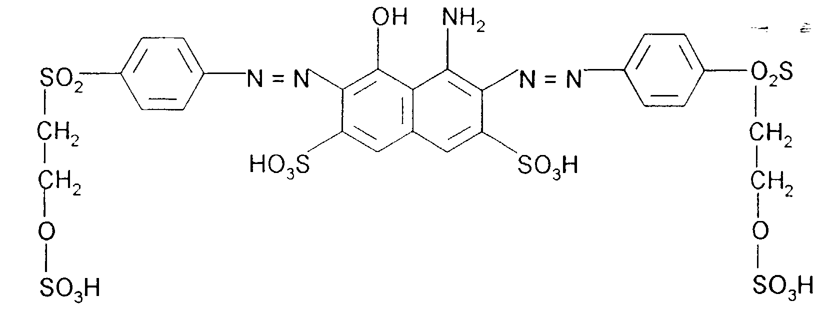

3. Mélange selon au moins une des revendications qui précédent, caractérisé en qu'il contient, par rapport à la somme des colorants
40 à 60 % en poids d'un colorant 1
0 à 60 % en poids d'un colorant 2
0 à 60 % en poids d'un colorant 3
0 à 60 % en poids du colorant 4.1,
avec obligatoirement au moins un des colorants 2 et 3.

4. Mélange selon au moins une des revendications qui précédent, caractérisé en ce que le mélange de colorants contient 1 à 50 parties d'un sel minéral pour 50 parties de colorants.

5. Mélange selon au moins une des revendication qui précèdent, caractérisé en ce qu'il contient, pour 100 parties de colorants, 1 à 5 parties d'un tampon minéral, 0,5 à 10 parties d'un agent dispersant et 0,5 à 5 parties d'un agent dépoussiérant, le mélange présentant un pH de 6,5 à 7,5.

6. Procédé pour la teinture des fibres cellulosiques ou des mélanges de fibres contenants de la cellulose, caractérisé en ce que l'on utilise un mélange de colorants réactif selon au moins une des revendications qui précèdent.

7. Mélange de colorants contenant les colorants de formules
